# EUROPÄISCHE PATENTSCHRIFT

(11) **EP 0 790 792 B1**
(45) Veröffentlichungstag und Bekanntmachung des Hinweises auf die Patenterteilung: **27.01.1999**
(21) Anmeldenummer: 95937800.1
(22) Anmeldetag: 19.10.1995
(51) Int. Cl.: A47B 13/02, A47B 21/00

(54) **TISCH**
TABLE
TABLE

(30) Priorität: 20.10.1994 DE 4437553
(43) Veröffentlichungstag der Anmeldung: 27.08.1997
(73) Patentinhaber: Flötotto Einrichtungssysteme GmbH & Co. KG, 33335 Gütersloh (DE)
(72) Erfinder: FLÖTOTTO, Reinhard-Heinrich, 33335 Gütersloh (DE); STOSCH, Martin, 32756 Detmold (DE); DIEKMANN, Bernd, 33790 Halle/Westfalen (DE)
(74) Vertreter: Patentanwälte Wenzel & Kalkoff
(86) Internationale Anmeldenummer: EP9504101
(87) Internationale Veröffentlichungsnummer: WO9612423

(56) Entgegenhaltungen:
- EP-A- 0 395 552
- EP-A- 0 539 586
- CH-A- 675 291
- FR-A- 2 010 442

## Beschreibung

Die Erfindung betrifft einen Tisch mit einem Rahmen, mindestens drei Tischbeinen und einer Tischplatte.

Tische sollen, insbesondere für Aufgaben im Büro- und Arbeitsbereich, möglichst flexibel an verschiedene Nutzungsanforderungen anpaßbar sein. Die Arbeitsfläche des Tisches soll mit wenigen Handgriffen an unterschiedliche Nutzungen anpaßbar sein, zum Beispiel durch Kombinieren mehrerer Tische, und die Tische sollen Zubehör und gegebenenfalls Arbeitsgeräte so aufnehmen, daß sie für den Benutzer leicht zu erreichen sind.

Tische mit Rahmenunterbau sind üblicherweise so aufgebaut, daß die Tischbeine in die Eckverbindung des Rahmens integriert sind. Die Tischplatte wird aufgelegt und ist meist mit dem Rahmen fest verbunden. Selbst wenn Rahmen, Tischbeine und Platte lösbar miteinander verbunden sind, ist die Position der Tischbeine bezogen auf Rahmen und Tischplatte festgelegt. Zubehörteile wie Telefonhalter, Arbeitslampe, Konzepthalter, Bildschirmhalter und ähnliches werden an die Tischplatte oder an Tischplatte und Rahmen angeklemmt. Die Tischplatte wird also stets in die Befestigung von Zubehör einbezogen, sie steht nie ausschließlich als Arbeitsfläche zur Verfügung.

Es stellt sich daher die Aufgabe, einen Tisch mit möglichst variablem Aufbau im Hinblick auf die Anordung von Tischbeinen, Rahmen und Tischplatte zueinander und gegebenenfalls von Zubehör zu entwickeln. Diese Aufgabe wird mit einem Tisch mit den Merkmalen des Anspruchs 1 gelöst.

Kern des erfindungsgemäßen Tisches ist der Rahmen, der aus miteinander verbundenen Rahmenprofilen aufgebaut ist. Die Tischbeine werden an frei wählbaren Stellen am Rahmen angeordnet, so daß beim Auf- oder Umbau des Tisches auf individuelle Anforderungen und Wünsche wie der Unterbringung von Unterstellcontainern, Computern etc. Rücksicht genommen werden kann. Auch nach dem Aufbauen des Tisches können die Tischbeine jederzeit leicht an anderen Stellen angeordnet werden. Der Rahmen nimmt auch Verbinder für andere Tische oder Tischelemente und/oder Schreibtischzubehör auf, so daß die Tischplatte frei bleibt. Unter Tischelementen wird nachfolgend eine Tischplatte oder ein Rahmen mit aufliegender Tischplatte verstanden.

Der erfindungsgemäße Tisch hat mindestens drei, vorzugsweise vier oder mehr Tischbeine, die die Standfestigkeit und Kippsicherheit des Tisches gewährleisten. Die Tischbeine sind an ihren oberen Enden so ausgebildet, daß sie lösbar am Rahmen zu befestigen sind. Die Tischplatte wird durch eine Aufnahme am Rahmen fixiert. Bevorzugt wird eine lösbare Befestigung, damit einerseits Umbauten einfach durchführbar sind und damit andererseits die Tischplatte gegebenenfalls einfach austauschbar ist.

Der Rahmen des Tisches kann als einfaches Rechteck aus Rahmenprofilen aufgebaut sein, bevorzugt wird jedoch, kreisbogen-segmentförmige Rahmen oder eine andere Rahmenform, z. B. Drei- oder Vielecke herzustellen, soweit sie wie die Bogensegmentform ergonomischen Anforderungen in hohem Maße gerecht werden.

Gemäß einer vorteilhaften Weiterbildung des erfindungsgemäßen Tisches sind die zum Herstellen der Rahmen verwendeten Rahmenprofile von rechteckigem, vorzugsweise quadratischem Querschnitt. Sie werden vorzugsweise aus Aluminium oder Aluminiumlegierungen gezogen, damit sie den Vorteil einer konstruktiven Vielgestaltigkeit mit hoher Präzision und vor allem geringem Gewicht verbinden, so daß eine gewicht- und platzsparende Rahmenkonstruktion ermöglicht wird.

Die Rahmenprofile weisen vorzugsweise im wesentlichen auf ihrer gesamten Länge Nuten in ihren vertikalen Seiten auf. Die Nuten bestehen aus einer Nutöffnung, hinter der ein Hohlraum im Inneren des Rahmenprofils liegt. Die Befestigungsmittel der Tischbeine, Verbinder und/oder des Schreibtischzubehörs greifen in diesen Hohlraum ein. Von außen ist jedoch nur die Nutöffnung in der vertikalen Seite des Profils zu sehen. Da auf diese Weise keine Befestigungspunkte vorgegeben sind, können Tischbeine, Verbinder und/oder Schreibtischzubehör jederzeit an frei wählbaren Stellen am Rahmen befestigt werden.

Gemäß einer besonders bevorzugten Ausführungsform des Tisches weisen die Rahmenprofile auf jeder vertikalen Seite eine Nut auf, so daß Tischbeine beispielsweise wahlweise in der Außennut oder in der Innennut befestigt werden können, je nachdem, wie die Platzverhältnisse es zulassen.

Die Rahmenprofile können auf jede bekannte Weise, z. B. durch Verschrauben, Vernieten, Schweißen etc. miteinander verbunden werden. Besonders bevorzugt wird jedoch der Einsatz von Eckverbindern, die mit den Rahmenprofilen im Eingriff stehen und die eine besonders verwindungssteife und schwingungsarme Verbindung gewährleisten. Die Eckverbinder können als lösbare Steckverbindung ausgebildet sein, bevorzugt wird jedoch die wesentlich stabilere unlösbare Preßverbindung, bei der Eckverbinder und Rahmenprofile mit enger Passung unter hohem Druck miteinander in Eingriff gebracht werden, beispielsweise durch Kaltschweißen.

Besonders bevorzugt wird ein Eckverbinder, der mit jedem der zu verbindenden Rahmenprofile durch ein Paar Zungen im Eingriff steht. Die Zungen sind vorzugsweise unterschiedlich lang, um bei minimalem Materialeinsatz größtmögliche Festigkeit der Verbindung zu erzielen. Die beiden Zungenpaare sind durch eine senkrecht zur Ebene der Tischplatte stehende Platte verbunden. Der Winkel, in dem die Platte zwischen den beiden Zungenpaaren steht, ist frei wählbar. Produktionstechnisch besonders einfach und optisch ansprechend ist jedoch eine Gehrungsverbindung, bei der die Platte den Winkel, in dem die Zungenpaare zueinander stehen, halbiert.

Gemäß einem besonderen Ausführungsbeispiel trägt der zweckmäßig als Zinkdruckgußteil hergestellte Eckverbinder, vorzugsweise zum Rahmeninneren hin, die Aufnahme für die Tischplatte. Besonders einfach ist es, die Aufnahme dort an der senkrecht stehenden Platte anzuformen, so daß die Rahmenprofile selbst frei bleiben. Es ist jedoch auch möglich, die Aufnahme in der gleichen Weise wie Zubehör am Rahmen anzubringen, oder z. B. auch als Buchse auszubilden, die zur Aufnahme eines in eine Tischplatte eingesetzten Zapfens in eine Bohrung im Rahmenprofil einsetzbar ist. Die Aufnahme besteht vorzugsweise aus einer Buchse, die eine konische Aufnahmeöffnung, einen Absatz und eine sich daran anschließende Erweiterung aufweist.

Tischbeine und Schreibtischzubehör können unmittelbar mit Befestigungselementen ausgestattet sein, die ein Befestigen dieser Bauteile in der Nut des Rahmenprofils ermöglichen. Es ist jedoch vorteilhaft, Adapter einzusetzen, die speziell auf die Nut der Rahmenprofile ausgerichtet sind, so daß ein sicheres Befestigen verschiedenster Teile ermöglicht wird, auch solcher Teile, die nicht besonders für diesen Rahmen angefertigt wurden. Solche Adapter sind lösbar an frei wahlbaren Stellen der Rahmenprofile zu befestigen. Sie weisen Aufnahmemittel, zum Beispiel für Tischbeine oder Schreibtischzubehör auf. Das Aufnahmemittel kann eine Bohrung sein, in die ein Tischbein oder ein Telefonhalter oder eine Arbeitsleuchte einsetzbar ist, es kann aber auch eine Aufnahme für eine Tischplatte sein. Der Adapter kann durch jede lösbare Verbindung am Rahmen befestigt werden. Bevorzugt wird jedoch eine Klemmverbindung. Dazu weist der Adapter Bohrungen für Schrauben auf. Die Bohrungen verlaufen senkrecht zu der dem Rahmen zugewandten Seite des Adapters. Die Schrauben weisen zur Befestigung in der Nut des Rahmenprofils vorzugsweise je einen Nutstein auf, der drehbar auf der Schraube gelagert ist. Die Nutsteine sind vorzugsweise rechteckig und passen mit ihrer Schmalseite durch die Nutöffnung, um sich dann beim Anziehen der Schraube im Hohlraum der Nut schräg vor die Nutöffnung zu legen. Der Adapter wird damit sicher an dem Rahmenprofil befestigt.

Zum Ausrichten des Adapters beim Ansetzen an das Rahmenprofil ist an der dem Rahmen zugewandten Seite des Adapters vorzugsweise mindestens eine Nase vorgesehen, die in die Nutöffnung hineinragt. Die Dicke der Nase entspricht im wesentlichen der Breite der Nutöffnung, so daß diese Verbindung zusätzlich zur Stabilität der Befestigung beiträgt.

Sollen besonders schwere oder große Teile am Rahmen befestigt werden, weist der Adapter gemäß einer weiteren Ausführungsform eine Auflagefläche auf, die das Rahmenprofil untergreift. Neben den punktförmigen Befestigungen durch Nutsteine und Nasen weist der Adapter damit eine Abstützung an dem Rahmen auf, die erheblich zur Kippsicherheit des Adapters und des darin befestigten Tischbeins oder Zubehörteils beiträgt.

Die am Rahmen anzubringenden Tischbeine können aus verschiedenen Materialien gefertigt sein, sind aber vorzugsweise aus Metall, insbesondere aus Aluminium oder Aluminiumlegierungen. Sie können als massives Vollprofil ausgebildet sein, bevorzugt wird aber ein Hohlprofil, bestehend aus einem Innen- und einem Außenrohr. Das Hohlprofil ist material- und gewichtsparend und dabei von hoher Festigkeit. Außerdem eröffnet es eine vielseitige Einstellbarkeit und weitere Nutzungsmöglichkeiten der Tischbeine. Die Tischbeine können an ihrem oberen Ende unmittelbar so ausgebildet sein, daß sie mit der Nut des Rahmenprofils in Eingriff bringbar sind, zum Beispiel durch Klemmen, Stecken oder Schrauben. Vorzugsweise sind die Tischbeine aber als Elemente gefertigt, die an ihrem oberen Ende mit einem vorstehend beschriebenen Adapter in Eingriff bringbar sind, und durch diesen am Rahmen zu befestigen sind. Eine besonders einfache und wirksame Anordnung von Adapter und Tischbein besteht darin, daß die Aufnahmeöffnung des Adapters und das obere Ende des Tischbeins konisch ausgebildet sind. Beim Ineinanderstecken von Tischbein und Adapter werden beide an einer gemeinsamen Achse ausgerichtet und die Außenfläche des Tischbeins und die Innenfläche der Aufnahmeöffnung des Adapters liegen im überlappenden Bereich schlagartig aneinander an. Die dadurch erzeugte Reibung ist insgesamt so hoch, daß das Tischbein zwar lösbar aber doch fest im Adapter aufgenommen und ausgerichtet ist. Besonders vorteilhaft ist es, daß keine Hilfmittel zum Herstellen dieser Verbindung erforderlich sind.

Die aus einem Hohlprofil mit Innen- und Außenrohr gefertigten Tischbeine weisen gemäß einer bevorzugten Ausführungsform eine Nut im Außenrohr auf, die aus der Nutöffnung und zwischen einem Außenrohr und Innenrohr gelegenen Hohlraum besteht. In der Nut können Befestigungselemente aufgenommen werden, mit denen sich weiteres Schreibtischzubehör wie Papierkörbe oder Ablageflächen für Drucker oder Computer anbringen läßt. Die Ablageflächen sind meist an zwei oder mehr Tischbeinen befestigt, um die nötige Kippsicherheit zu erreichen.

Die Tischplatte oder eine andere Platte, die am Rahmen anzubringen ist, wird vorzugsweise mit einer Zapfen-Buchsen-Verbindung befestigt. Die Buchse kann aus einer sich konisch verjüngenden Aufnahmeöffnung bestehen, an die sich ein Absatz mit daran angesetzer Erweiterung anschließt. Der Zapfen ist vorzugsweise zylindrisch mit einem Abschnitt geringeren Durchmessers und einem Abschnitt größeren Durchmessers. Der Abschnitt geringeren Durchmessers ist mit einem Gewinde versehen und wird in eine dafür vorgesehene Bohrung an der Unterseite der Tischplatte oder einer anderen Platte eingeschraubt. Der Abschnitt größeren Durchmessers ist an seinem freien Ende vorzugsweise mit einer Nut versehen, in die ein elastischer Ring, vorzugsweise ein ovaler Sprengring eingesetzt ist. Unter einem elastischen Ring wird nachfolgend ein runder oder ovaler Ring mit flachem oder rundem Querschnitt verstanden, der sich unter Druck elastisch verformt. Der Ring muß nicht vollständig geschlossen sein, es kann typischerweise ein Sprenging sein. Beim Ineinanderfügen von Zapfen und Buchse verrastet der elastische Ring des Zapfens hinter dem Absatz der Buchse. Das Verbinden oder Lösen von Rahmen und Platte kann in einfacher Weise dadurch erfolgen, daß auf die Ober- oder Unterseite der Platte Druck ausgeübt wird, beispielsweise durch einen Faustschlag.

Um mit wenigen Tischen flexibel arbeiten zu können und die Arbeitsfläche immer wieder an den Arbeitsprozeß anpassen zu können, ist es wünschenswert, daß sich einzelne Tische oder Tische und Tischelemente zu Tischgruppen verbinden lassen. Es wird daher ein Verbinder vorgeschlagen, der als Doppel-U-Profil ausgebildet ist und mit dem zwei Rahmen verbindbar sind. Eine Bodenplatte untergreift die zu verbindenden Rahmenprofile. Von der Bodenplatte erstrecken sich drei Stege senkrecht nach oben, parallel zu den vertikalen Seiten der Rahmenprofile. Durch Bohrungen in den äußeren Stegen sind Schrauben geführt, die zum Beispiel mit dem Hohlraum der Nut der Rahmenprofile in Eingriff bringbar sind. Durch die Verschraubung sind die Rahmen fest, aber lösbar miteinander verbunden. Der Verbinder wird vorzugsweise aus Zinkdruckguß gefertigt.

Ein besonders bevorzugter Verbinder weist einen verbreiterten mittleren Steg auf, der Aufnahmemittel für Schreibtischzubehör hat. Damit sind Tische oder Tischelemente auf Abstand miteinander verbindbar und zwischen den Tischen oder Tischelementen kann platzsparend Schreibtischzubehör angeordnet werden.

Der erfindungsgemäße Tisch kann weiter mit einem aus Kabelkanal-Elementen aufgebauten Kabelkanal ausgerüstet werden, der ebenfalls in der Nut des Rahmenprofils anbringbar ist. Die Kabelkanal-Elemente sind als U- oder Doppel-U-Profil aus Kunststoff gefertigt. Die Bodenfläche des Elements ist so ausgebildet, daß sie mit der Bodenfläche angrenzender Elemente überlappt. Im Überlappungsbereich ist eine lösbare Verbindung, die vorzugsweise aus Rastnase und Rastöffnung besteht, ausgebildet. Die Kabelkanal-Elemente sind so ausgebildet, daß sie in die Nut des Rahmenprofils einhängbar sind. Als besonders vorteilhaft wird angesehen, daß die einzelnen Elemente, auch wenn sie miteinander verbunden sind, gegeneinander innerhalb vorgegebener Grenzen drehbar bleiben, damit der Kabelkanal einem durch die Rahmenform oder dergleichen vorgegebenen Verlauf anpaßbar ist.

Schließlich kann an dem Tisch, vorzugsweise an dessen dem Benutzer abgewandten Seite, ein Träger für einen verschieblichen und neigbaren Computerbildschirm angesetzt werden. Der Träger besteht gemäß einer bevorzugten Ausführungsform aus zwei im Abstand voneinander am Rahmen angeordneten Winkeln aus Rahmenprofilen mit einem senkrechten und einem -in der Gebrauchslage- von dem Tisch wegweisenden waagerechten Schenkel. Ein verfahrbarer Wagen ist vorzugsweise an einer zwischen den senkrechten Schenkeln angebrachten Führungsschiene angebracht. Gemäß einer besonders bevorzugten Ausführungsform rollt dieser Wagen auf einer zwischen den waagerechten Schenkeln angebrachten Abdeckplatte ab. Dadurch wird der meist schwere Bildschirm besser abgestützt. Der Wagen besteht vorzugsweise aus einem Stütz- und einem Trägerelement, die innerhalb vorgegebener Begrenzungen gegeneinander neigbar und in der gewählten Stellung arretierbar sind. Der Bildschirm kann dann auch bei gebogenen Rahmen zwischen den Winkeln entlang der Schiene verschoben werden. Der Träger für einen Computerbildschirm kann weiter ein zwischen den waagerechten Schenkeln angeordnetes Rahmenprofil umfassen, an dem gegebenenfalls Stützbeine befestigt sind.

Nachstehend werden Ausführungsbeispiele der Erfindung anhand der Zeichnungen näher erläutert. Es zeigen
- Fig. 1: eine Ansicht eines Tisches;
- Fig. 2: eine Ansicht von zwei miteinander verbundenen Tischen mit Kabelkanal und Träger für einen Computerbildschirm;
- Fig. 3: eine Ansicht von drei Tischen mit Verbindungsplatte und Druckertisch;
- Fig. 4a: eine Draufsicht eines rechteckigen Rahmens,
- Fig. 4b: einen Querschnitt eines Rahmenprofils entlang der Schnittlinie A-A von Fig. 4a;
- Fig. 5a: eine Draufsicht auf einen kreisbogen-segmentförmigen Rahmen,
- Fig. 5b: einen Querschnitt eines Rahmenprofils entlang der Schnittlinie A-A von Fig. 5a;
- Fig. 6a: eine Draufsicht auf einen Eckverbinder,
- Fig. 6b: eine Schnittdarstellung entlang der Linie A-A von Fig. 6a und
- Fig. 6c: eine Schnittdarstellung entlang der Linie B-B von Fig. 6a;
- Fig. 7a: eine Draufsicht eines Adapters,
- Fig. 7b: eine Vorderansicht des Adapters von Fig. 7a und
- Fig. 7c: eine Schnittdarstellung entlang der Linie A-A von Fig. 7b;
- Fig. 8a: eine teilweise geschnittene Draufsicht auf einen zweiten Adapter,
- Fig. 8b: einen Schnitt entlang der Linie A-A von Fig. 8a;
- Fig. 9a: eine Ansicht eines Tischbeins, das in den zweiten Adapter eingesetzt ist und
- Fig. 9b: eine Schnittdarstellung durch das Tischbein entlang der Linie A-A von Fig. 9a;
- Fig. 10a: eine Ansicht der Höhenverstellung des Tischbeins,
- Fig. 10b: einen Querschnitt des Tischbeins entlang der Linie A-A von Fig. 10a,
- Fig. 10c: einen Querschnitt des Tischbeins entlang der Linie B-B von Fig. 10a und,
- Fig. 10d: eine Ansicht der zur Höhenverstellung verwendeten Hülse;
- Fig. 11: eine Ansicht eines mit einer Aufnahme am Rahmen des Tisches verrastbaren Zapfens;
- Fig. 12: eine Schnittdarstellung eines Verbinders, zum Verbinden von Rahmenprofilen einsetzbar ist;
- Fig. 13: eine Schnittdarstellung eines Verbinders, der zum Verbinden von im Abstand voneinander angeordneten Rahmen;
- Fig. 14a: eine Draufsicht auf ein Kabelkanal-Element,
- Fig. 14b: eine Vorderansicht eines Kabelkanal-Elements und
- Fig. 14c: eine Schnittdarstellung des Kabelkanal-Elements entlang der Schnittlinie A-A von Fig. 14a;
- Fig. 15: eine Ansicht eines Tisches mit daran angesetztem Träger für einen Computerbildschirm
- Fig. 16a: eine Draufsicht auf einen kreisbogen-segmentförmigen Rahmen mit daran angesetztem Träger für einen Computerbildschirm und
- Fig. 16b: eine Seitenansicht dieses Rahmens, sowie
- Fig. 16c: als Detail "Z" das Abstützen des Computerbildschirms auf dem Computertisch.

In den Darstellungen der verschiedenen Ausführungsbeispiele werden für gleiche Teile gleiche Bezugszeichen verwendet.

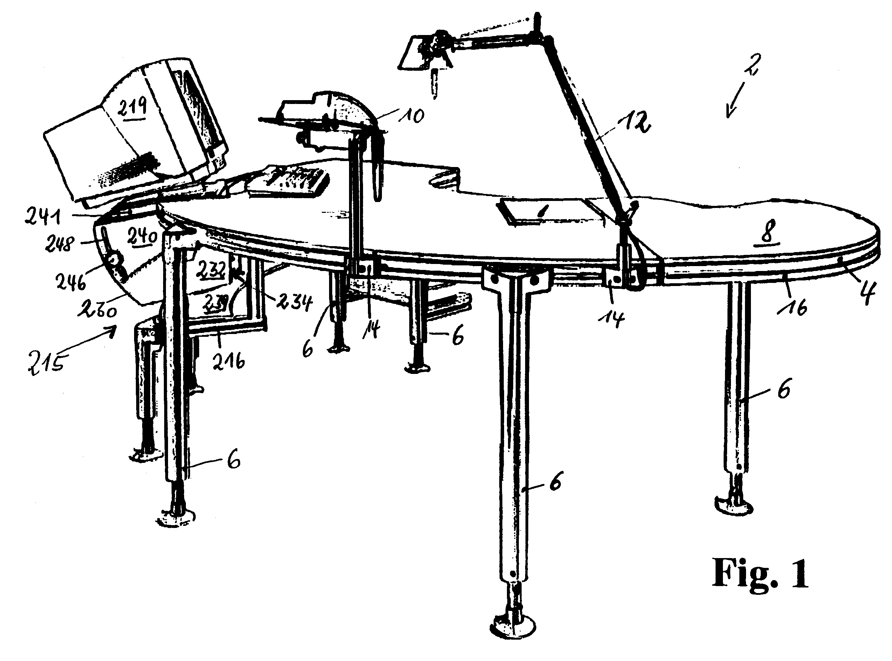

Fig. 1 zeigt einen Tisch 2 mit einem Rahmen 4, mit fünf Tischbeinen 6, die am Rahmen 4 an frei wahlbaren Stellen angebracht sind und mit einer Tischplatte 8, die auf dem Rahmen 4 aufliegt. Am Rahmen 4 ist auch Schreibtischzubehör angebracht. Ein Telefonhalter 10 und eine Arbeitsleuchte 12 sind mittels Adapter 14 an frei wählbaren Stellen am Rahmen 4 befestigt.

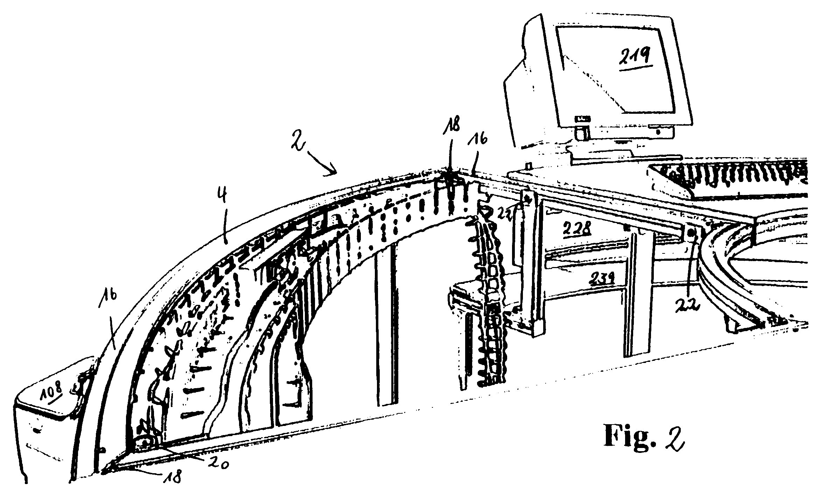

In Fig. 2 ist der Rahmen 4 ohne Tischplatte abgebildet, so daß die einzelnen Rahmenprofile 16 zu sehen sind, die durch Eckverbinder 18 zu einem geschlossenen Rahmen verbunden sind. Am Rahmen 4 ist jeweils an den Eckverbindern 18 eine Aufnahme 20 für die Tischplatte 8 angeordnet.

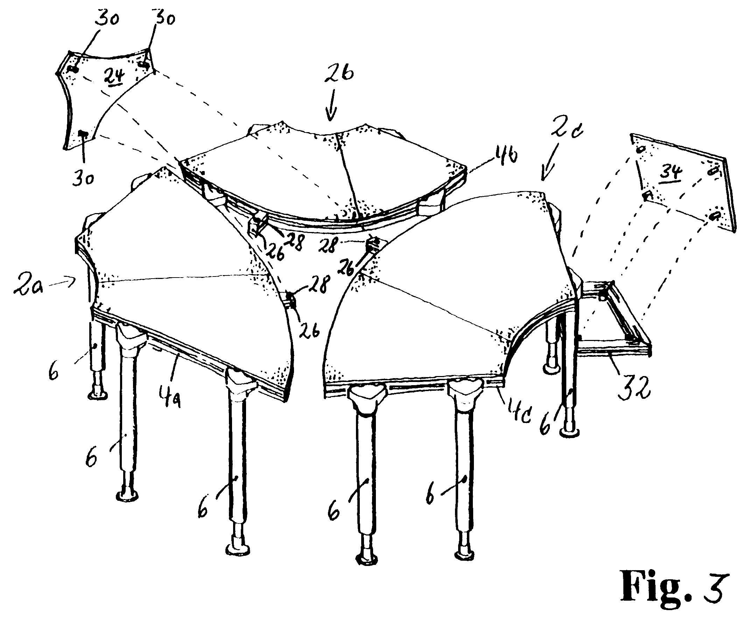

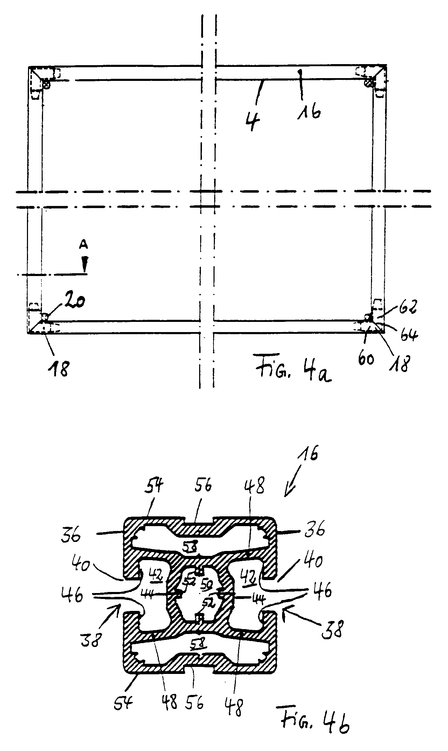

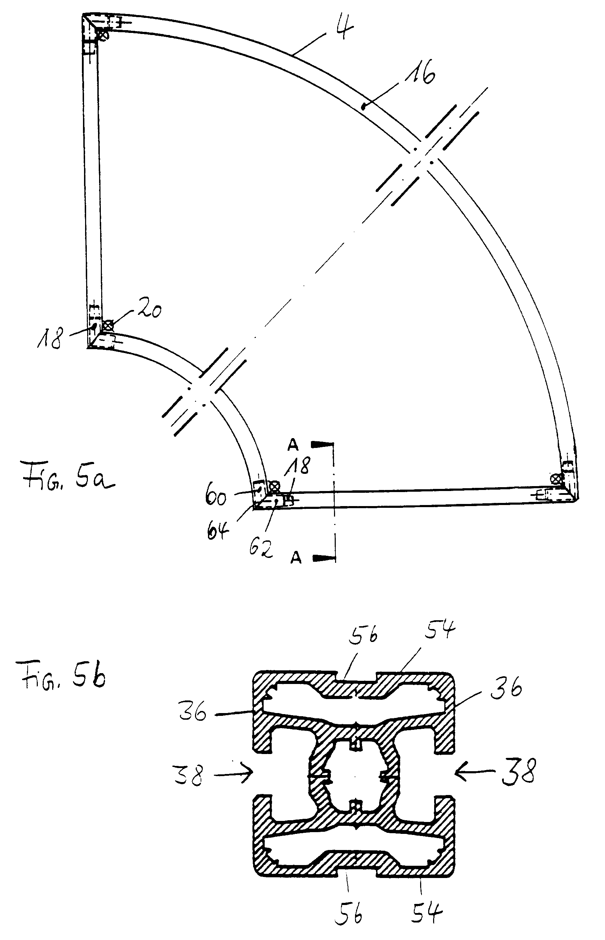

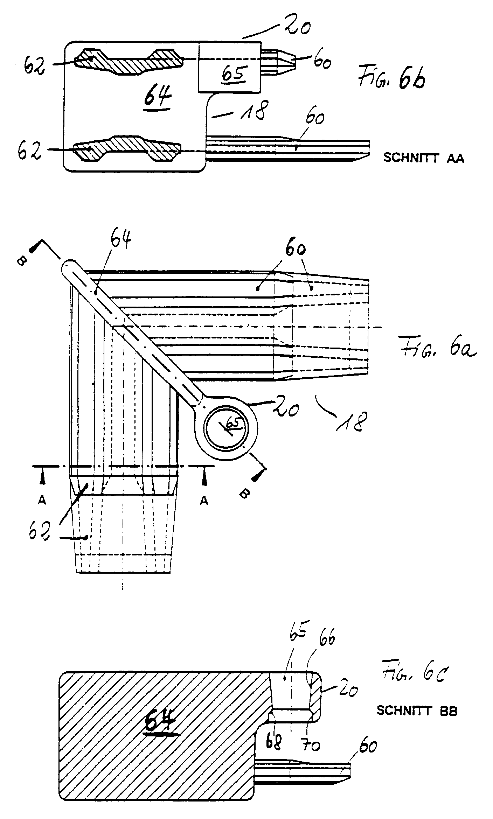

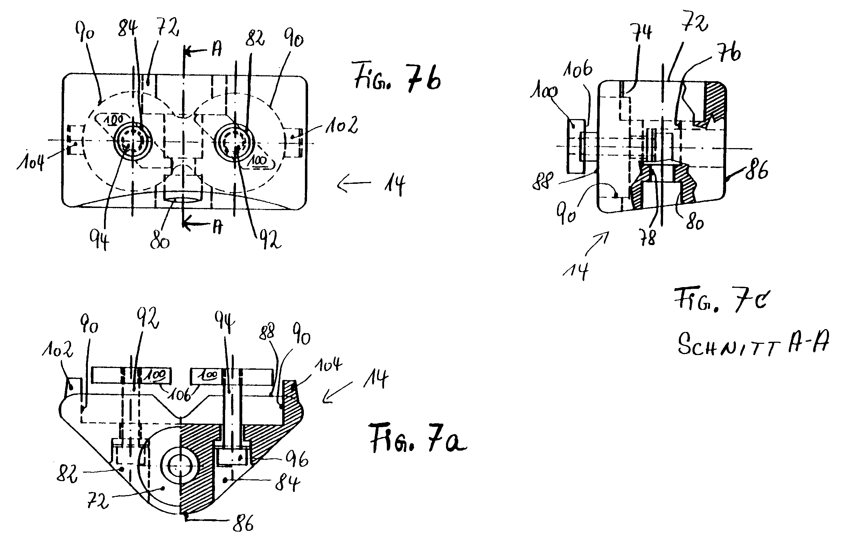

Fig. 2 zeigt Verbinder 22, durch die ein Tisch mit einem Träger 215 für einen Computerbildschirm 219 an den kreisbogenförmigen Rahmen 4 des ersten Tisches 2 angeschlossen ist. In Fig. 3 ist eine mögliche Kombination von drei Tischen bzw. Tischelementen 2a, 2b und 2c dargestellt, die durch eine Verbindungsplatte 24 verbindbar sind. Die Verbindungsplatte 24 verrastet mit Adaptern 26, die an den Rahmen 4a, 4b und 4c der Tische 2a, 2b, 2c befestigt sind. Die Adapter 26 weisen dazu Aufnahmen 28 auf, die mit Zapfen 30 an der Verbindungsplatte 24 fluchten. An den Beinen 6 des Tisches 2c ist ein Ansatzrahmen 32 mit einer Platte 34 angebracht, auf der beispielsweise ein Drucker oder eine PC-Station abgestellt werden kann.

Ein rechteckiger Rahmen 4a ist in Fig. 4 abgebildet. Der Rahmen 4 ist aus vier Rahmenprofilen 16 aufgebaut, die durch in der Zeichnung angedeutete Eckverbinder 18 miteinander verbunden sind. Die Rahmenprofile 16 sind aus einer Aluminiumlegierung gefertigt. Fig. 4b zeigt einen Schnitt quer zur Längsachse eines Rahmenprofils 16. Das Rahmenprofil 16 weist einen quadratischen Querschnitt auf. In die bezogen auf die Ebene der Tischplatte 8 vertikalen Seiten 36 ist jeweils eine Nut 38 eingearbeitet, die sich über die gesamte Länge des Rahmenprofils 16 erstreckt. Die Nut 38 hat eine Nutöffnung 40 in der vertikalen Seite 36 des Rahmenprofils 16, die im Inneren des Rahmenprofils 16 in einem Hohlraum 42 mündet. Der Hohlraum 42 wird begrenzt durch die der Nutöffnung 40 gegenüberliegende Andruckfläche 44, die innere Oberfläche der vertikalen Seite 36 als Anlagefläche 46 und die sich im wesentlichen senkrecht zur Andruck- und Anlagefläche 44 bzw. 46 erstreckenden Profilstege 48. Die Andruckfläche 44 und die Anlagefläche 46 dienen zum Abstützen von Befestigungselementen wie Schrauben, Klemmen, Nutsteinen. In der Nut 38 der Rahmenprofile 16 werden die am Rahmen 4 zu befestigenden Bauteile wie z. B. Tischbeine 6, Schreibtischzubehör 10, 12 und/oder Verbinder 22 aufgenommen. Die Bauteile werden entweder direkt oder mittels Adapter 14 an den Rahmen 4 geschraubt oder geklemmt, indem ein Nutstein 100 oder ein Rasthaken 210 mit dem Hohlraum 42 der Nut 38 im Eingriff steht.

Die Andruckflächen 44 und die Profilstege 48 umschließen einen zentralen Hohlraum 50, der an den Stirnflächen des Rahmenprofils 16 offen ist. In den Hohlraum 50 ragen zum Ausrichten von Befestigungselementen vier symmetrisch angeordnete Zentriernasen 52 hinein. In diesem Hohlraum 50 werden Befestigungselemente aufgenommen, beispielsweise Schrauben, mit denen Rahmenprofile 16 aneinander befestigt werden oder Klemmen von Verschlußkappen, die die offenen Stirnseiten von Rahmenprofilen verschließen sollen.

Die horizontalen Seiten 54 der Rahmenprofile 16 weisen Ausnehmungen 56 auf. In die jeweils an der Tischplatte 8 anliegende Ausnehmung 56 können Filzstreifen oder andere Dämpfungselemente eingebracht werden, die das Aufliegen der Tischplatte 8 auf dem Rahmen 4 verbessern.

Die horizontalen Seiten 54 und die Profilstege 48 umschließen jeweils Hohlräume 58, die die Eckverbinder 18 zum Verbinden der Rahmenprofile 16 aufnehmen. Die Eckverbinder 18 können zwar auch mit den Hohlräumen 42 der Nuten 38 im Eingriff stehen, doch wird in diesem Fall die freie Anordnung der Tischbeine und/oder des Schreibtischzubehörs stärker eingeschränkt.

Fig. 5a zeigt einen kreisbogen-segmentförmigen Rahmen 4 in der Draufsicht. Die Rahmenprofile 16 weisen denselben Querschnitt auf wie die des rechteckigen Rahmens 4 (Fig. 5b). Auch die gebogenen Rahmenprofile 16 haben an jeder vertikalen Seite 36 eine Nut 38, die genauso aufgebaut ist wie die in Fig. 4b beschriebene Nut.

Fig. 6a zeigt einen Eckverbinder 18 aus Zinkdruckguß, der die bevorzugte Lösung zum Verbinden der Rahmenprofile 16 zu einem Rahmen 4 darstellt. Der Eckverbinder 18 weist zwei Paar Zungen 60, 62 auf, die in demselben Winkel zueinander stehen wie die zu verbindenden Rahmenprofile. Die an die Winkelstellung der Rahmenprofile 16 angepaßte Stellung der Zungen der Paare 60, 62 ist auch aus den in Fig. 5a angedeuteten Eckverbindern 18 ersichtlich. Wie aus Fig. 6b zu ersehen ist, weisen die Zungen 62 eine Außenkontur auf, die der Innenkontur des Hohlraums 58 der Rahmenprofile 16 entspricht, mit dem die Eckverbinder 18 im fertigen Rahmen 4 im Eingriff stehen. Die Zungenpaare 60, 62 sind so dimensioniert, daß sie beim Aufschieben der Rahmenprofile 16 auf den Eckverbinder 18 mit enger Passung in die korrespondierenden Hohlräume 58 eingreifen.

Die Zungen 60, 62 sind durch eine senkrecht zur Ebene der Tischplatte 8 angeordnete Platte 64 verbunden. Die Platte 64 halbiert den Winkel, in dem die Rahmenprofile 16 zueinander stehen, so daß eine Gehrungsverbindung entsteht. Beim Herstellen des Rahmens werden die Rahmenprofile 16 an den an die Platte 64 angrenzenden Stirnflächen auf Gehrung geschnitten, so daß sie nach dem Verbinden von Rahmenprofilen und Eckverbindern bündig mit der Platte 64 abschließen. Rahmenprofile 16 und Eckverbinder 18 werden dann bei ca. 7 **t**/**cm**^{**2**}, also bei hoher Flächenpressung, miteinander kalt verschweißt. Es entsteht eine unlösbare Verbindung zwischen den Rahmenprofilen 16 und dem Eckverbinder 18.

Wie in Fig. 6c gezeigt, weist der Eckverbinder 18 eine an der Platte 64 angeformte Aufnahme 20 zum lösbaren Befestigen der Tischplatte 8 auf, die in den Rahmen 4 hineinragt. Die Aufnahme 20 besteht aus einer Buchse 65 mit sich konisch verjüngender Aufnahmeöffnung 66, die an einem Absatz 68 mündet, unterhalb dessen sich eine Erweiterung 70 anschließt. Zum Befestigen der Tischplatte 8 nimmt die Aufnahmeöffnung 66 einen an der Unterseite der Tischplatte 8 befestigten Zapfen 146 auf, an dessen freiem Ende ein elastischer Ring 160 befestigt ist, der in der Erweiterung 70 hinter dem Absatz 68 verrastet.

Die Fig. 7a bis 7c zeigen einen Adapter 14 für Schreibtischzubehör, der an frei wählbaren Stellen in der Nut 38 des Rahmens 4 befestigt wird. Der Adapter 14 weist eine Aufnahmeöffnung 72 auf. Diese Aufnahmeöffnung 72 ist als Topfbohrung senkrecht zur Ebene der Tischplatte 8 ausgebildet. Das Schreibtischzubehör, hier der Telefonhalter 10 oder die Arbeitsleuchte 12, sind mit einem zylindrisch stabförmigen Absatz (nicht dargestellt) in die Aufnahmeöffnung 72 einsetzbar. Wie in Fig. 7c gut zu erkennen, weist die Aufnahmeöffnung 72 vier Abschnitte mit unterschiedlichem Querschnitt auf. Ein erster Abschnitt 74 weist den größten Durchmesser auf; daran schließt sich ein zweiter Abschnitt 76 mit reduziertem Querschnitt an. Diese beiden Abschnitte 74 und 76 nehmen den stabförmigen Absatz des Schreibtischzubehörs auf. Unterhalb des Abschnitts 76 schließt sich der Abschnitt 78 mit dem kleinsten Durchmesser an. Zur Unterseite des Adapters 14 öffnet sich der an den Abschnitt 78 anschließende Abschnitt 80. Durch die Abschnitte 78 und 80 ist eine Schraube einführbar, die sich gemäß dieser bevorzugten Ausführungsform in eine mit Innengewinde versehene Bohrung im unteren Ende des stabförmigen Absatzes des Schreibtischzubehörs einschrauben läßt.

Rechts und links neben der Aufnahmeöffnung 72 und senkrecht dazu erstrecken sich zwei Bohrungen 82 und 84. Die Bohrungen 82 und 84 durchsetzen den Adapter 14 von einer dem Tisch abgewandten Seite 86 zu der dem Tisch zugewandten Seite 88. Auf der Seite 88 sind die Bohrungen 82 und 84 in einem Abschnitt 90 topfartig erweitert. Durch die Bohrungen 82 und 84 sind Schrauben 92 und 94 geführt, die in den Bohrungen 82, 84 verschiebbar sind. Ein erstes Ende 96 der Schrauben weist einen Kopf mit Innensechskant auf. Das zweite Ende 98 der Schrauben ist mit einem Gewinde versehen. Auf das Gewinde ist je ein Nutstein 100 aufgedreht. Durch Aufnieten des Endes 98 der Schrauben 92 und 94 ist der Nutstein 100 unverlierbar auf der Schraube befestigt. Der Abschnitt 90 der Bohrungen 82 und 84 ist so bemessen, daß die Nutsteine 100 vollständig darin aufgenommen werden, so daß sie mit der Fläche 88 bündig abschließen. Weiter weist der Adapter 14 an der Fläche 88 zwei vorstehende Nasen 102, 104 auf. Diese Nasen 102 und 104 sind am Adapter 14 möglichst weit voneinander beabstandet und sie befinden sich in Höhe der Nut 38. Die Dicke der Nasen 102, 104 entspricht der Weite der Nutöffnung 40.

Der Adapter 14 wird wie nachstehend beschrieben am Rahmen 4 befestigt. Die Schrauben 92, 94 werden so weit zurückgezogen, daß die Nutsteine 100 vollständig in dem Abschnitt 90 aufgenommen sind. Dann wird der Adapter 14 mit der dem Tisch zugewandten Seite 88 so vor dem Rahmen 4 positioniert, daß die Nasen 102, 104 mit der Nutöffnung 40 im Eingriff stehen. Nun ist der Adapter waagerecht ausgerichtet und die Nutsteine 100 können in waagerechter Stellung durch die Nutöffnung 40 in den Hohlraum 42 eingeführt werden. Die Schrauben 92, 94 werden dazu in Richtung auf den Rahmen 4 vorgeschoben. Nunmehr werden die Schrauben 92, 94 angezogen. Dabei sperren sich die Nutsteine 100 im Hohlraum 42, indem die Flanken der Nutsteine an den Profilstegen 48 anliegen. Die zum Adapter gewandten Außenflächen 106 der Nutsteine liegen bei angezogenen Schrauben an den Anlageflächen 46 der Nut 38 an. Der Adapter 14 ist damit auf Zug am Rahmen 4 befestigt. Nachdem die Schrauben 92, 94 angezogen sind, wird der Telefonhalter 10 oder die Arbeitsleuchte 12 in die Aufnahmeöffnung 72 eingesetzt und von unten durch die Abschnitte 78 und 80 verschraubt.

Anstelle der Aufnahmeöffnung 72 kann, wie in Fig. 3 gezeigt, ein Adapter 26, der im übrigen wie der Adapter 14 ausgebildet ist, eine Aufnahme 28 aufweisen, die mit einem in die Unterseite einer Tischplatte 8 oder eines anderen Möbelelements eingesetzten Zapfen 146 in Eingriff bringbar ist.

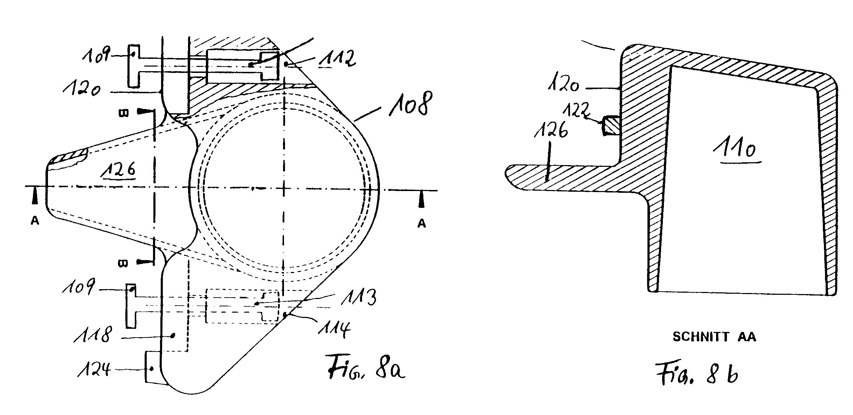

Ein anderes Ausführungsbeispiel eines Adapters zeigen die Fig. 8a und 8b. Der Adapter 108 dient zum Befestigen eines Tischbeins 6 an beliebiger Stelle am Rahmen 4. Der Adapter 108 weist eine Aufnahme 110 auf, die sich von der Unterseite nach oben erstreckt. Die Aufnahme 110 verjüngt sich nach oben in einem regelmäßigen Konus. Das Tischbein 6 wird von unten in die Aufnahme 110 gesteckt und haftet durch Reibung.

Wie beim in den Fig. 7a bis 7c beschriebenen Adapter 14 sind auch beim Adapter 108 senkrecht zur Aufnahme 110 zwei Bohrungen 112 und 114 angeordnet, die jeweils in Abschnitten 116 und 118 münden, die an der dem Rahmen 4 zugewandten Seite 120 des Adapters 108 ausgeformt sind. Durch die Abschnitte 116, 118 werden zum Anbringen des Adapters 108 am Rahmen 4 mit Nutsteinen 109 versehene Schrauben 111 und 113 gesteckt. Der Adapter 108 weist an der dem Rahmen 4 zugewandten Seite 120 Nasen 122 und 124 auf, die in Höhe der Nutöffnung 40 des Rahmenprofils 16 angeordnet sind. Ihre Dicke entspricht in etwa der Höhe der Nutöffnung 40. Außerdem weist der Adapter 108 an der dem Rahmen 4 zugewandten Seite einen Vorsprung 126 auf, der bei positioniertem Adapter 108 den Rahmen 4 untergreift. Damit ist der Adapter 108 bei angezogenen Schrauben unverrückbar und kippsicher am Rahmen 4 befestigt. Das Tischbein läßt sich jedoch einfach und schnell verschieben, sobald die beiden Schrauben gelöst werden und der Adapter -mit oder ohne Tischbein- entweder in der Nut 38 verschoben oder in die Nut 38 eines anderen Rahmenprofils 16 eingesetzt wird.

Die in den Fig. 7a bis 7c und 8a, 8b beschriebenen Adapter 14, 108 werden aus Zinkdruckguß gefertigt.

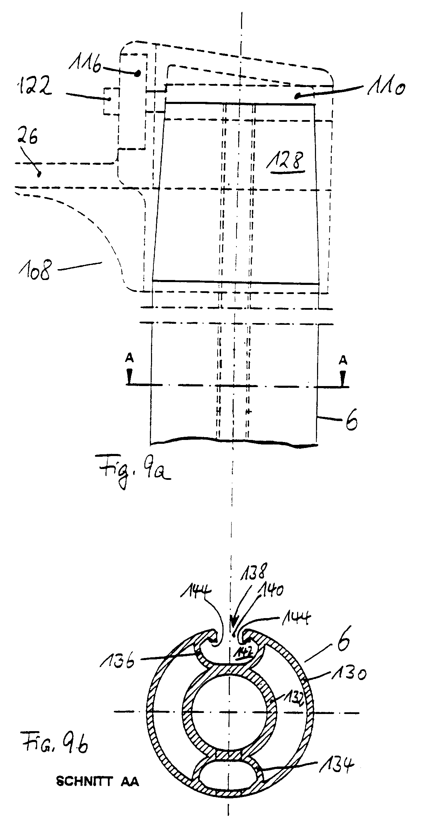

Fig. 9a zeigt ein Tischbein 6, das mit seinem oberen Endabschnitt 128 in den Adapter 108 eingesetzt ist. Der obere Endabschnitt 128 ist mit dem gleichen Konus abgeschrägt wie die Aufnahme 110 des Adapters 108. Tischbein 6 und Adapter 108 liegen hier vollflächig aneinander an. Das Tischbein 6 besteht, wie in Fig. 9 gezeigt, aus einem Außenrohr 130 und einem Innenrohr 132, die durch Stege 134 und 136 verbunden sind. Zwischen den Ansatzstellen des Steges 136 ist in das Außenrohr 130 eine Nut 138 eingearbeitet, die eine Nutöffnung 140, einen hinter der Nutöffnung 140 liegenden Hohlraum 142, der durch das Innenrohr und den Steg 136 begrenzt ist und Anlageflächen 144 aufweist, die die Nutöffnung 140 zum Hohlraum 142 hin begrenzen. Die Nut erstreckt sich über die gesamte Länge des Tischbeins 6. In der Nut 138 können, wie zum Beispiel in Fig. 3 gezeigt, an frei wählbaren Stellen am Tischbein 6 Schreibtischzubehör oder Ablagen 32, 34 für Bürogeräte wie Computer oder Drucker befestigt werden.

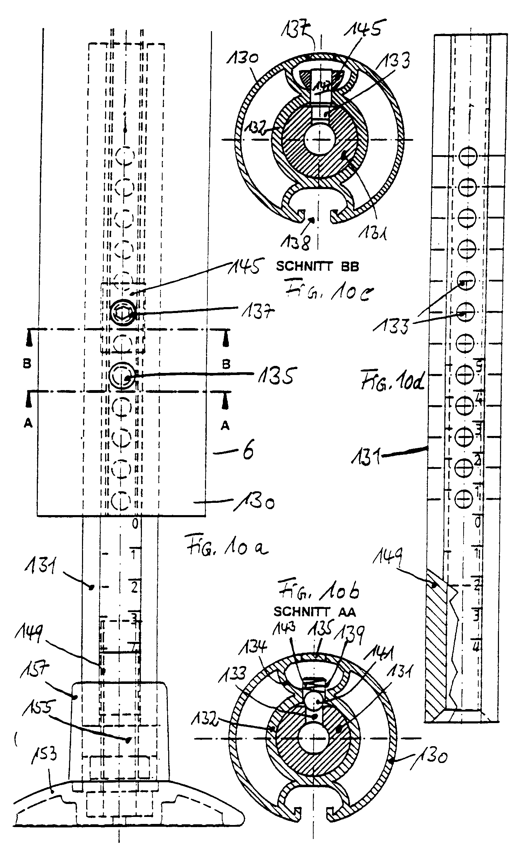

Das Tischbein 6 weist wie in Fig. 10 a gezeigt, an seinem unteren Ende eine Höhenverstellung und einen Höhenausgleich auf. Die Höhenverstellung ist eine
Kugeldruck-Verstellung, mit der die Höhe des Tisches 2 einstellbar ist; der Höhenausgleich ist als stufenloses Gewinde ausgeführt, durch den Unebenheiten des Bodens am einzelnen Tischfuß ausgleichbar sind. Das vorstehend beschriebene Tischbein 6 wird als gezogenes Aluminiumprofil hergestellt.

Die Fig. 10a bis 10d zeigen Einzelheiten der Höhenverstellung. In das Innenrohr 132 des Tischbeins wird eine Hülse 131 gleitend eingesetzt, die in Fig. 10d im Detail gezeigt ist. Die Hülse 131 ragt aus dem unteren Ende des Tischbeins 6 heraus (siehe Fig. 10a). Auf der Oberfläche der Hülse 131 sind Markierungen angebracht, die anzeigen, auf welche Höhe das Tischbein jeweils eingestellt ist. Die Markierungen sind für denjenigen, der das Tischbein 6 auf die gewünschte Höhe einstellt, sichtbar. Die Hülse 131 ist mit einer Reihe von Bohrungen 133 versehen, mittels derer die Hülse 131 und das Tischbein 6 in vorgegebener Stellung zueinander fixiert werden. Das Tischbein 6 ist zum Fixieren der Hülse 131 mit zwei Bohrungen 135 und 137 versehen die das Innenrohr 132 und das Außenrohr 130 durchsetzen. Die Bohrungen 135 und 137 sind auf der der Nut 138 entgegengesetzten Seite des Tischbeins 6 angebracht. Durch die untere Bohrung 135 ist, wie in Fig. 10b dargestellt, eine Buchse 139 eingesetzt, die eine Kugel 141 aufnimmt, die gegen eine Feder 143 in der Buchse 139 gelagert ist. Die Hülse 141 ist derart im Innenrohr 132 eingesetzt, daß die in einer Reihe liegenden Bohrungen 133 der Buchse 139 gegenüberliegen. Liegen sich beim Verschieben der Hülse 133 im Innenrohr 132 eine Bohrung 133 und die Kugel 141 auf gleicher Höhe gegenüber, rastet die Kugel 141 in der Bohrung 133 ein. Damit ist die Hülse 131 aber nur vorläufig im Innenrohr 132 fixiert, denn wegen der kleinen Federkraft der Feder 143 genügen schon geringe Zug- oder Druckkräfte, um die Kugel 141 gegen die Feder 143 zu drängen und die Hülse 131 zu verschieben. Dieser Effekt ist erwünscht, um die Hülse 131 von Hand fixieren zu können, doch um eine belastbare Verbindung herzustellen, bedarf es eines weiteren Befestigungsmittels, das in Fig. 10c dargestellt ist.

Durch die in Gebrauchslage oberhalb der Bohrung 135 angeordnete Bohrung 137 ist eine durch einen Nutstein 145 gehaltene Schraube 147 eingesetzt. Ist die Hülse 131 durch die Kugel 141 im Innenrohr 132 fixiert, so ist die Bohrung 137 -und damit auch die Schraube 147 ebenfalls einer Bohrung 133 gegenüber angeordnet. Durch die Bohrung 137 hindurch wird zum Fixieren von Hülse 131 und Tischbein 6 aneinander die Schraube 147 in die korrespondierende Bohrung 133 eingedreht. Damit ist das Tischbein 6 auf die gewünschte Höhe eingestellt.

Der Höhenausgleich erfolgt mit Hilfe des unteren Endes 149 der Hülse 131 und eines Tischfußes 151. Der Tischfuß 151 besteht aus einer Bodenplatte 153 und einem mittig in die Bodenplatte 153 eingesetzten Bolzen 155 mit Außengewinde. Der Bolzen 155 steht mit dem mit einem Innengewinde versehenen unteren Ende 149 der Hülse 131 im Eingriff. Der Tischfuß 151 ist gegenüber der Hülse in einem Bereich, der geringer ist als der Abstand zweier Bohrungen 133 zueinander, drehbar. Der Höhenausgleich erfolgt, indem die Überwurfhülse 157 hochgeschoben wird und der Tischfuß 151 gedreht wird.

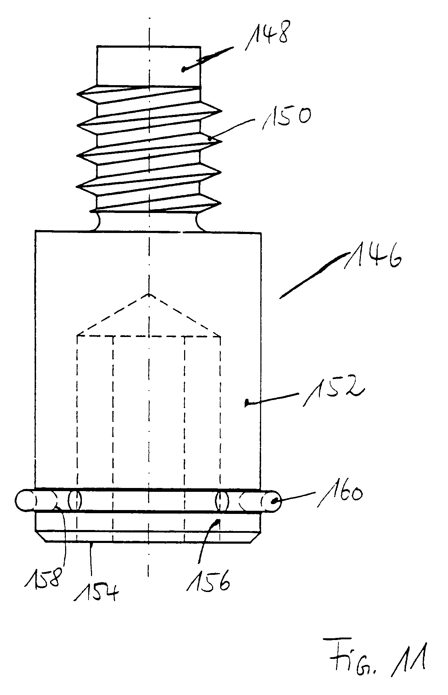

Fig. 11 zeigt einen Zapfen 146, der in einer mit dem Tisch 2 zu verbindenden Tischplatte 8 einsetzbar ist, und der mit der in Fig. 6 beschriebenen Aufnahme 20 zusammenwirkt. Der Zapfen 146 ist zylindrisch und weist einen ersten Abschnitt 148 auf, der mit einem Gewinde 150 versehen ist. Dieser erste Abschnitt 148 ist in eine entsprechende Bohrung auf der Unterseite einer Tischplatte 8 (nicht dargestellt) einschraubbar. Ein zweiter Abschnitt 152 weist einen größeren Durchmesser auf als der erste Abschnitt 148. In die freie Stirnseite 154 des zweiten Abschnitts 152 ist ein Innen-Sechskant-Schraubenkopf 156 eingearbeitet. In den zweiten Abschnitt 152 ist eine ringförmige Nut 158 eingearbeitet. In die Nut 158 ist ein elastischer Sprengring 160 von ovaler Form eingesetzt. Der Sprengring 160 ist aus Federstahl. Die Nut 158 mit dem Sprengring 160 ist so am zweiten Abschnitt 152 angeordnet, daß der Sprengring 160, wenn der Zapfen 146 mit der Aufnahme 20 im Eingriff steht, in der Erweiterung 70 an dem Absatz 68 der Aufnahme 20 anliegt. Die Zapfen 146 sind so an der Unterseite der Tischplatte 8 angeordnet, daß sie bei lose auf den Rahmen 4 aufgelegter Tischplatte mit den Aufnahmen 20 fluchten. Die Tischplatte 8 wird dann einfach durch Druck von Hand mit den Aufnahmen verrastet.

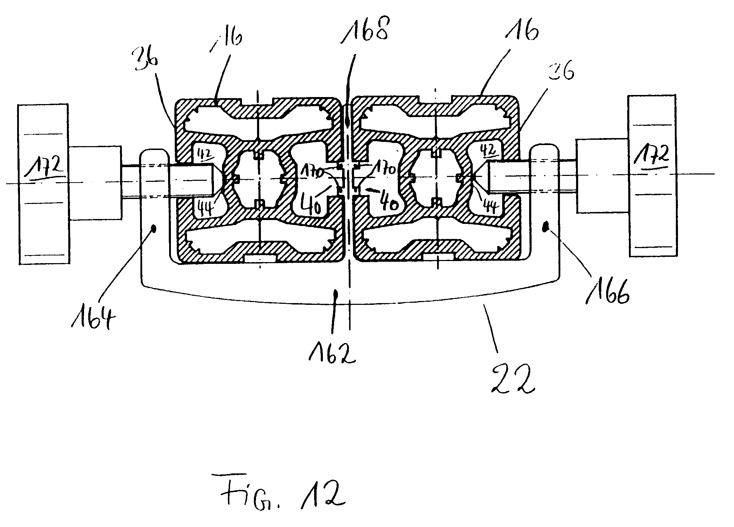

In Fig. 12 ist dargestellt, wie die Rahmenprofile 16 zweier Rahmen 4 mittels eines Verbinders 22 miteinander verbunden sind. Die Rahmenprofile 16 weisen auf jeder vertikalen Seite 36 eine Nut 38 auf. Der Verbinder 22 besteht aus einer Bodenplatte 162, zwei Außenstegen 164 und 166, die an vertikalen Seiten 36 der Rahmenprofile 16 anliegen und einem mittleren Steg 168, der zwischen die zu verbindenden Rahmenprofile 16 ragt. Die Stege 162, 164 und 166 erstrecken sich senkrecht von der Bodenplatte 162 nach oben. Der mittlere Steg 168 weist in Höhe der Nut 38 auf jeder Seite zwei Vorsprünge 170 auf, die in die Nutöffnungen 40 hineinragen und so die beiden Rahmenprofile 16 in definierter Stellung zueinander positionieren.

Die Außenstege 164, 166 weisen jeweils eine Bohrung auf, durch die jeweils eine Befestigungsschraube 172 ragt. Die Bohrung und die Befestigungsschrauben 172 sind so von der Bodenplatte 162 beabstandet, daß die Schraube durch die Nutöffnung 40 in den Hohlraum 42 ragt und bei befestigtem Verbinder gegen die Andruckfläche 44 drückt. Der Verbinder wird aus Zinkdruckguß gefertigt.

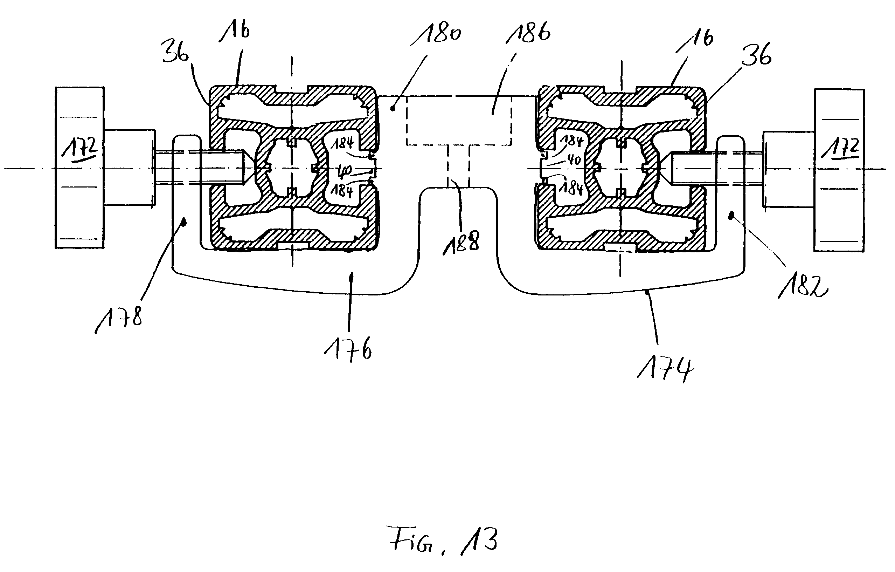

Fig. 13 zeigt einen zweiten Verbinder 174, der zum Verbinden zweier Tische oder eines Tisches und eines Tischelements in vorgegebenem Abstand voneinander vorgesehen ist. Dieser Verbinder 174 weist Bodenabschnitte 176 auf, von denen ausgehend sich Stege 178, 180, 182 senkrecht nach oben erstrecken. Der mittlere Steg 180 weist an seinen an die vertikalen Seiten 36 der Rahmenprofile 16 grenzenden Flächen Vorsprünge 184 auf, die in die Nuten 38 der Rahmenprofile 16 hineinragen. Der mittlere Steg 180 dieses Verbinders 174 ist so breit bemessen, daß er Aufnahmemittel für Schreibtischzubehör aufnehmen kann. Hier besteht das Aufnahmemittel aus einer Topfbohrung 186, die in einer engeren Bohrung 188 mündet, die sich bis zur Unterseite des mittleren Steges 180 erstreckt. Ein im Durchmesser mit der Topfbohrung 186 korrespondiernder, zylindrischer Abschnitt des Schreibtischzubehörs (nicht dargestellt) ist in die Bohrungen 186, 188 einsetzbar und wird, sofern dieser Abschnitt des Schreibtischzubehörs eine Bohrung mit Innengewinde aufweist, mit einer von unten durch die Bohrung 188 eingesetzten Schraube (nicht dargestellt) fixiert.

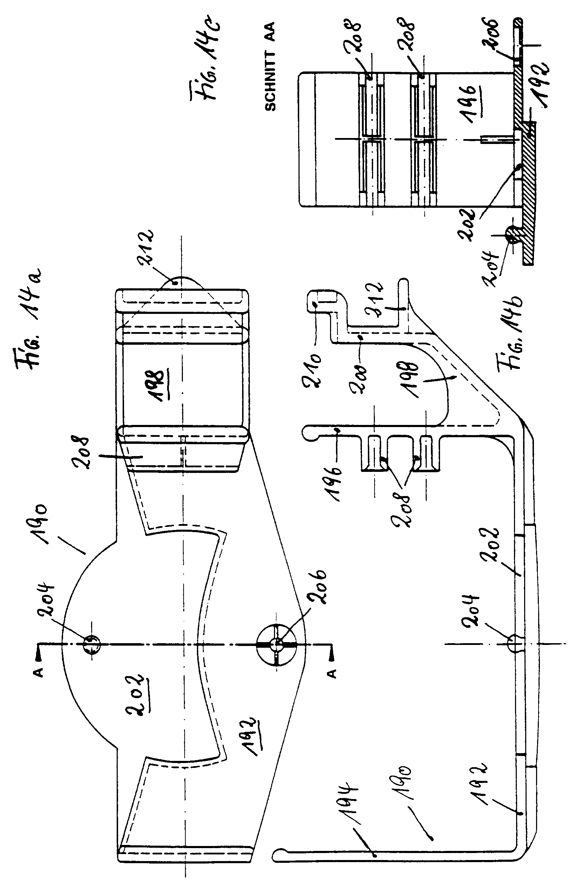

Fig. 14a bis 14c zeigt ein Element 190 eines Kabelkanals. Mehrere Elemente sind lösbar zu einem Kabelkanal verbindbar, in dem Stromversorgungs- und Steuerkabel für am Tisch 2 befindliche Geräte verdeckt unter der Tischplatte geführt werden. Das Element 190 ist als doppeltes U-Profil ausgebildet. Es weist eine Bodenfläche 192 und sich davon senkrecht nach oben erstreckende Stege 194, 196 auf. Angrenzend an den Steg 196 schließt sich eine Verbindungsfläche 198 an die Bodenfläche 192 des Kabelkanalelements 190 an. Von der Verbindungsfläche 198 erstreckt sich ein weiterer Steg 200 senkrecht nach oben. Die Bodenfläche 192 ist zumindest abschnittsweise breiter als die Stege 194, 196, 200, wie aus Fig. 14 c zu ersehen ist.

Die Bodenfläche 192 ist an einem Ende des Kabelkanal-Elements in einem ersten Abschnitt 202 nach unten versetzt, was in Fig. 14c deutlich zu erkennen ist. Im Abschnitt 202, in etwa mittig zwischen den Stegen 194 und 196 ist eine Rastnase 204 ausgebildet, die aus dem Abschnitt 202 nach oben über die Bodenfläche 192 vorsteht. Am entgegengesetzten Ende der Bodenfläche 192 ist eine Rastöffnung 206 fluchtend mit der Rastnase 204 angeordnet. Die Rastnase 204 und die Rastöffnung 206 sind so angeordnet, daß beim Verbinden von zwei Kabelkanal-Elementen die Rastnase 204 des ersten Elements mit der Rastöffnung 206 des zweiten Elements in Eingriff bringbar ist. Die Elemente 190 werden durch einfaches Zusammendrücken miteinander verbunden. Da die einzelnen Elemente nur punktuell miteinander verbunden sind, bleiben sie gegeneinander drehbar und passen sich daher nicht nur an gerade sondern auch an geschwungene Konturen an. Winkel von ca. 15° oder mehr zwischen einzelnen Elementen sind beim Zusammenbau ohne weiteres möglich.

Der durch die Stege 194 und 196 begrenzte Teil des Kabelkanal-Elements 190 ist zum Aufnehmen von Anschlußkabeln der Stromversorgung gedacht. Der Steg 196 weist zwei übereinander angeordnete, an den Steg angeformte Vorsprünge 208 auf, die zum Steg 194 hin geöffnet sind. Zwischen den Vorsprüngen können Kabel eingeklemmt werden. Der durch die Stege 196 und 200 begrenzte Teil des Kabelkanal-Elements ist zum Aufnehmen von Steuerkabeln, allgemein von Kabeln kleineren Querschnitts vorgesehen. Das Kabelkanal-Element 190 ist aus Kunststoff gefertigt.

Der Steg 200 ist so ausgebildet, daß er mit einer Nut 38 eines Rahmenprofils 16 in Eingriff bringbar ist. An dem von der Verbindungsfläche 198 abgewandten Ende ist ein Rasthaken 210 an den Steg 200 angeformt, der beim Befestigen des Kabelkanal-Elements 190 am Rahmen 4 durch die Nutöffnung 40 in den Hohlraum 42 eingeführt wird und eine am Steg 200 angeformte, vom Kabelkanal-Element wegweisende Rastfläche 212 greift unter das Rahmenprofil und fixiert das Kabelkanal-Element 190.

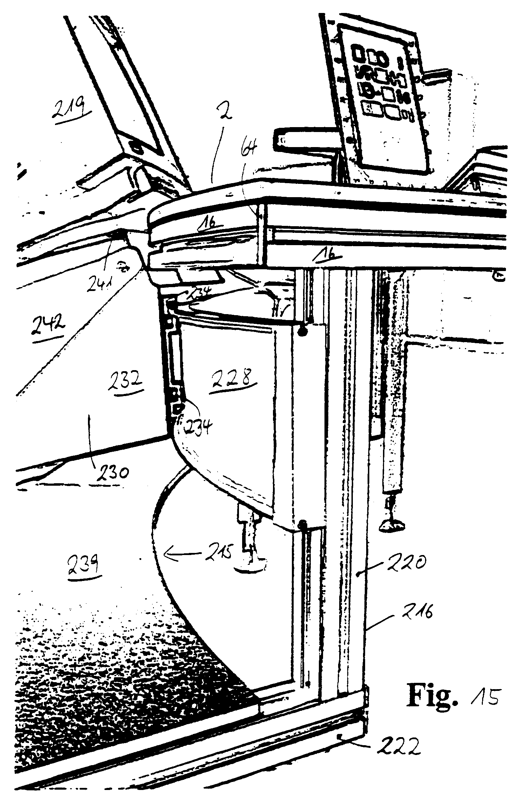

Fig. 15 zeigt eine ausschnittweise Ansicht eines Trägers 215 für einen Computerbildschirm 219. An den kreisbogen-segmentförmigen Tisch 2 ist an dessen vom Benutzer abgewandte Seite ein Träger 215 für einen Computerbildschirm angesetzt. Der Träger 215 besteht aus zwei Winkeln 216, 218, von denen einer in Fig. 15 gezeigt ist. Die Winkel 216, 218 tragen eine Abdeckplatte 239, auf der ein Wagen 230 abrollt. Der Wagen 230 ist an einer zwischen den Schenkeln 220 der Winkel 216, 218 angebrachten Schiene 228 gehalten. Er rollt mittels Laufrollen 234 in der Schiene 228. Der Wagen 230 weist Aufnahmemittel 241 für den Computerbildschirm 219 auf.

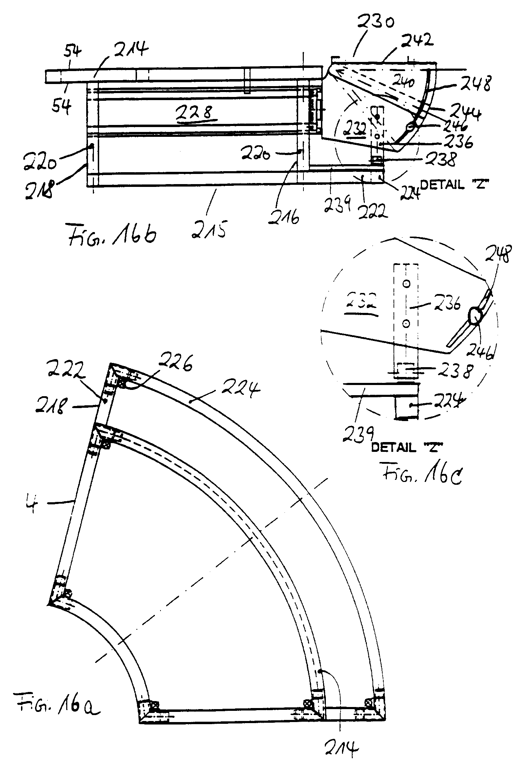

Fig. 16a bis 16c zeigen eine Draufsicht und eine Seitenansicht des Rahmens 4 und des Trägers 215 für den Computerbildschirm 219, der in Fig. 1, 2 und 15 abgebildet ist. Der Rahmen 4 ist kreisbogen-segmentförmig. An das äußere Rahmenprofil 214 ist ein Träger 215 mit den Winkeln 216 und 218 für einen Computerbildschirm 217 angesetzt. Ein erster Schenkel 220 der Winkel 216, 218 erstreckt sich vom Rahmenprofil 214 senkrecht nach unten, der zweite Schenkel 222 der Winkel 216, 218 erstreckt sich in der Ebene des Rahmens 4, aber parallel nach unten verschoben, vom Rahmen 4 weg. Die vom Rahmen 4 abgewandten Enden sind durch ein kreisbogen-segmentförmiges Rahmenprofil 224 miteinander verbunden. Das Rahmenprofil 224 ist mit den waagerechten Schenkeln 222 durch Eckverbinder verbunden. Die Schenkel 220, 222 der Winkel 216 und 218 sind miteinander verschraubt, ebenso sind die Winkel 216, 218 mit dem Rahmenprofil 214 verschraubt. Zu diesem Zweck sind Bohrungen durch die horizontalen Außenwände 54 des Rahmenprofils geführt, die mit Schrauben durchsetzt sind, die mit dem zentralen Hohlraum 50 der Winkelprofile im Eingriff stehen (siehe Beschreibung zu Fig. 4b). An den Winkeln 216, 218 bzw. dem Rahmenprofil 224 sind Aufnahmen 226 für die Abdeckplatte 239 (siehe auch Fig. 1, 2 und 15) angebracht.

An den Schenkeln 220 der Winkel 216, 218 ist eine Schiene 228 angebracht, die so profiliert ist, daß sie Laufrollen 234 des Wagens 230 aufnehmen und führen kann (siehe auch Fig. 15). Der Wagen 230 weist ein Stützelement 232 auf, an dem die mit der Schiene 228 in Eingriff stehenden Laufrollen 234 angebracht sind. Am Stützelement 232 ist, wie aus der Fig. 16c ersichtlich, an einem Träger 236 eine Stützrolle 238 angebracht, die auf der Abdeckplatte 239 abrollt, die zwischen den Schenkeln 222 der Winkel 216, 218 angebracht ist. An der dem Rahmen 4 zugewandten Oberkante des Stützelements 232 ist ein Trägerelement 240 angelenkt, das um eine parallel zum Rahmenprofil 214 verlaufende Achse schwenkbar ist. Auf der Oberfläche 242 des Trägerelements 240 sind Aufnahmemittel 241 für einen Computerbildschirm 219 angeordnet (siehe Fig. 1, 2 und 15). Trägerelement 240 und Stützelement 232 stehen weiter an der dem Rahmen abgewandten Seite 244 miteinander im Eingriff, indem eine Klemmschraube 246, die auch in Fig. 1 gut zu erkennen ist, durch Schlitze 248, die im Trägerelement 240 und im Stützelement 232 ausgebildet sind, hindurchgreift. Das Trägerelement 240 ist damit, bezogen auf das Stützelement 232 in einem Winkelbereich von mindestens 15° stufenlos schwenkbar und in jeder gewählten Stellung durch die Klemmschraube 246 am Stützelement 232 zu arretieren.

### Bezugszeichenliste

- 2: Tisch
- 4: Rahmen
- 6: Tischbeine
- 8: Tischplatte
- 10: Telefonhalter
- 12: Arbeitsleuchte
- 14: Adapter für Telefonhalter und Arbeitsleuchte
- 16: Rahmenprofile
- 18: Eckverbinder
- 20: Aufnahme
- 22: Verbinder
- 24: Verbindungsplatte
- 26: Adapter
- 28: Aufnahme
- 30: Zapfen
- 32: Ansatzrahmen
- 34: Platte für Ansatzrahmen
- 36: vertikale Seite
- 38: Nut
- 40: Nutöffnung
- 42: Hohlraum
- 44: Andruckfläche
- 46: Anlagefläche
- 48: Profilstege
- 50: zentraler Hohlraum
- 52: Zentriernasen
- 54: horizontale Seite
- 56: Ausnehmung
- 58: Hohlraum für Eckverbinder
- 60: 1. Paar Zungen
- 62: 2. Paar Zungen
- 64: senkrechte Platte
- 65: Buchse
- 66: konische Aufnahmeöffnung
- 68: Absatz
- 70: Erweiterung
- 72: Aufnahmeöffnung
- 74-80: Abschnitte der Aufnahmeöffnung
- 82,84: Bohrungen
- 86: tischabgewandte Seite des Adapters
- 88: tischzugewandte Seite des Adapters
- 90: topfartig erweiterter Abschnitt
- 92, 94: Schrauben
- 96: Kopf mit Innensechskant
- 98: 2. Ende mit Außengewinde
- 100: Nutstein
- 102, 104: Nasen
- 106: Außenfläche des Nutsteins
- 108: Tischbein-Adapter
- 109: Nutstein
- 110: Aufnahme
- 111, 113: Schrauben
- 112, 114: Bohrungen
- 116, 118: topfartig erweiterter Abschnitt
- 120: dem Rahmen zugewandte Seite des Adapters
- 122, 124: Nasen
- 126: Vorsprung
- 128: oberer Abschnitt des Tischbeins
- 130: Außenrohr
- 131: Hülse
- 132: Innenrohr
- 133: Bohrungen zum Fixieren der Hülse
- 134, 136: Stege zwischen Außen- und Innenrohr
- 135, 137: Bohrung im Tischbein
- 138: Nut
- 139: Buchse in der Bohrung 135
- 140: Nutöffnung
- 141: Kugel
- 142: Hohlraum
- 143: Feder
- 144: Anlagefläche
- 145: Nutstein
- 146: Zapfen
- 147: Schraube
- 148: 1. Abschnitt
- 149: unteres Ende der Hülse 131
- 150: Gewinde
- 151: Tischfuß
- 152: 2. Abschnitt
- 153: Bodenplatte
- 154: Stirnseite
- 155: Bolzen
- 156: Innen-Sechskant
- 157: Überwurfhülse
- 158: ringförmige Nut
- 160: elastischer Sprengring
- 162: Bodenplatte des Verbinders 22
- 164, 166: Außenstege
- 168: Mittelsteg
- 170: Vorsprünge
- 172: Befestigungsschrauben
- 174: Verbinder
- 176: Bodenplatte
- 178,180,182: Stege
- 184: Vorsprünge
- 186: Topfbohrung
- 188: schmale Bohrung
- 190: Kabelkanal-Element
- 192: Bodenfläche
- 194, 196: Stege
- 198: Verbindungsfläche
- 200: Steg
- 202: Vertiefung
- 204: Rastnase
- 206: Rastöffnung
- 208: Vorsprünge
- 210: Rasthaken
- 212: Stützfläche
- 214: Rahmenprofil
- 215: Träger für einen Computerbildschirm
- 216, 218: Winkel
- 219: Computerbildschirm
- 220: senkrechter Schenkel
- 222: waagerechter Schenkel
- 224: kreisbogen-segmentförmiges Rahmenprofil
- 226: Aufnahmen
- 228: Schiene
- 230: Wagen
- 232: Stützelement
- 234: Laufrollen
- 236: Träger
- 238: Stützrolle
- 239: Abdeckplatte
- 240: Trägerelement
- 241: Aufnahmemittel für Computerbildschirm
- 242: Oberfläche des Trägerelements
- 244: dem Rahmen abgewandte Seite des Bildschirmträgers 230
- 246: Klemmschraube
- 248: Schlitze

## Patentansprüche

1. Tisch (2) mit
- einem Rahmen (4),
- der aus miteinander verbundenen Rahmenprofilen (16) aufgebaut ist,
- der an den Rahmenprofilen (16) an beliebigen, frei wählbaren Stellen Tischbeine (6) und wahlweise Verbinder (22) für andere Tische und/oder Schreibtischzubhör (10, 12) aufnimmt und der
- mindestens eine Aufnahme (20) für eine Tischplatte (8) aufweist, mit
- minestens drei Tischbeinen (6), die jeweils an ihren oberen Enden (128) Befestigungselemente oder mit Befestigungselementen versehene Adapter aufweisen und die so für das Anbringen an frei wählbaren Stellen der Rahmenprofile (16) ausgebildet sind, und mit
- einer Tischplatte (8), die auf der Aufnahme (20) des Rahmens (4) aufliegt.

2. Tisch nach Anspruch 1, dadurch gekennzeichnet, daß der Rahmen (4) aus rechteckig oder kreisbogen-segmentförmig angeordneten Rahmenprofilen (16) aufgebaut ist.

3. Tisch nach Anspruch 1 oder 2, dadurch gekennzeichnet, daß das Rahmenprofil (16) einen rechteckigen, vorzugsweise quadratischen Querschnitt aufweist, und daß in mindestens einer, bezogen auf die Ebene der Tischplatte vertikalen Seite (36) des Rahmenprofils (16) eine Nut (38) mit einer Nutöffnung (40) ausgearbeitet ist, die parallel zur Ebene der Tischplatte und im wesentlichen durchgehend über die gesamte Länge des Rahmenprofils (16) verläuft.

4. Tisch nach Anspruch 1, dadurch gekennzeichnet, daß die Rahmenprofile (16) durch Eckverbinder (18), die miteinander im Eingriff stehen, fest oder lösbar zur Bildung des Rahmens (4) verbunden sind.

5. Tisch nach Anspruch 4, dadurch gekennzeichnet, daß der Eckverbinder (18) zwei Paar Zungen (60, 62) aufweist, die jeweils in zwei sich parallel zur Ebene der Tischplatte (8) erstreckende Hohlräume (58) der zu verbindenden Rahmenprofile (16) einpaßbar sind, und daß die zwei Paar Zungen (60, 62) des Eckverbinders (18) durch eine, bezogen auf die Ebene der Tischplatte, senkrechte Platte (64) verbunden sind.

6. Tisch nach Anspruch 1 oder 5, dadurch gekennzeichnet, daß an dem Rahmenprofil (16) oder an dem Eckverbinder (18), vorzugsweise an dessen senkrechter Platte (64), eine Aufnahme (20) für die Tischplatte (8) angeordnet ist.

7. Tisch nach Anspruch 1, dadurch gekennzeichnet, daß ein Adapter (14, 26, 108) mit Aufnahmemitteln (72, 110) für Tischbeine (6), Tischplatte (8) oder Schreibtischzubehör (10, 12) lösbar an frei wählbaren Stellen des Rahmenprofils (16) zu befestigen ist.

8. Tisch nach Anspruch 7, dadurch gekennzeichnet, daß
- die Aufnahmemittel aus einer Aufnahmeöffnung (72, 110) bestehen, daß
- zwei Bohrungen (82, 84; 112, 114) rechts und links von der Aufnahmeöffnung (72, 110) sich im wesentlichen senkrecht zur Aufnahmeöffnung erstrecken und daß
- zwei Schrauben (92, 94 111, 113) durch die Bohrungen (82, 84) geführt sind, an deren vom Schraubenkopf abgewandten Enden (98) je ein Nutstein (100, 109) befestigt ist, der so dimensioniert ist, daß er in den Nuten (38) der Rahmenprofile (16) verriegelbar ist.

9. Tisch nach Anspruch 7 oder 8, dadurch gekennzeichnet, daß der Adapter (14, 108) an der dem Rahmenprofil zugewandten Fläche (88, 120) mindesten eine Nase (102, 104; 122, 124) aufweist, deren Dicke im wesentlichen der Höhe der Nutöffnung (40) entspricht und die nach dem Befestigen des Adapters (14, 108) am Rahmenprofil (16) in die Nut (38) hineinragt.

10. Tisch nach einem der Ansprüche 7 bis 9, dadurch gekennzeichnet, daß der Adapter (108) eine Auflagefläche (126) aufweist, die das Rahmenprofil (16) untergreift.

11. Tisch nach Anspruch 1 und 7, dadurch gekennzeichnet, daß das Tischbein (6) aus einem Hohlprofil gefertigt ist, bei dem ein Innenrohr (132) von einem Außenrohr (130) umgeben ist, wobei das Außenrohr (130) gegebenenfalls eine Nut (138) aufweist.

12. Tisch nach Anspruch 11, dadurch gekennzeichnet, daß das Tischbein (6) an dem dem Adapter (108) zugewandten Ende (128) sich zu seiner Stirnfläche hin konisch verjüngt und daß die Aufnahmeöffnung (110) des Adapters (108) ebenfalls konisch ausgebildet ist.

13. Tisch nach Anspruch 11, dadurch gekennzeichnet, daß Schreibtischzubehör wie Telefon- oder Vorlagenhalter, Tabletts, Papierkorb oder Druckerablage mittels Adapter (14) lösbar am Rahmen (4) oder Tischbein (6) anbringbar ist.

14. Tisch nach Anspruch 1 und 7, dadurch gekennzeichnet, daß ein Adapter (26) zum Anbringen an dem Rahmen (4) zwei Bohrungen aufweist, durch die Schrauben geführt sind, die an einem Ende einen Nutstein aufweisen, wobei der Nutstein in die Nutöffnung des Rahmens eingreift und wobei der Adapter (26) einen dem Rahmen abgewandten Arm hat, der eine Aufnahme (28) aufweist, die mit einem an einem Möbelelement, beispielsweise einer Tischplatte (8) angebrachten Zapfen (146) mit elastischem Ring (160) verrastbar ist.

15. Tisch nach Anspruch 1, dadurch gekennzeichnet, daß die Tischplatte (8) an ihrer Unterseite mit mindestens einem Zapfen (146) versehen ist, dessen erstes Ende (148) ein Gewinde (150) zum Einschrauben des Zapfens 146) in die Tischplatte (8) aufweist und dessen zweites Ende (152) eine Nut (158) aufweist, in die ein elastischer Ring (160) eingesetzt ist, wobei der Zapfen (146) so in die Tischplatte (8) eingeschraubt ist, daß bei aufgelegter Tischplatte der Zapfen mit der Aufnahmeöffnung (66) am Rahmen (4) fluchtet und mit dieser dadurch verrastet, daß der elastische Ring (160) an dem Absatz (68) der Buchse (65) anliegt.

16. Tisch nach Anspruch 1, dadurch gekennzeichnet, daß ein Verbinder (22) am Rahmen (4) anbringbar ist, durch den ein erster Tisch lösbar mit einem zweiten Tisch oder Tischelement verbindbar ist, wobei der Verbinder (22) als doppeltes U-Profil mit mindestens drei senkrecht stehenden Stegen (164, 166, 168) ausgebildet ist, dessen senkrecht stehende Stege den vertikalen Seiten (36) der Rahmenprofile (16) gegenüberliegen und dessen Bodenplatte (162) die zu verbindenden Rahmenprofile (16) untergreift, und wobei in die äußeren Stege (164, 166) Schrauben (172) eingelassen sind, die nach Befestigen des Verbinders (22) an Andruckflächen (44) im Inneren der Rahmenprofile (16) anliegen.

17. Tisch nach Anspruch 16, dadurch gekennzeichnet, daß der Verbinder (174) Bodenabschnitte (176) aufweist, von denen sich drei Stege (178, 180, 182) senkrecht nach oben erstrecken, wobei der mittlere Steg (180) so breit ausgebildet ist, daß zwei Rahmen (4) in definiertem Abstand zueinander positioniert werden können und wobei der mittlere Steg (180) Aufnahmemittel (186) aufweist, in denen Schreibtischzubehör (10. 12) aufnehmbar ist.

18. Tisch nach Anspruch 1, dadurch gekennzeichnet, daß einzelne Kabelkanal-Elemente (190) unter Bildung eines Kabelkanals in die Nut (38) der Rahmenprofile (16) einhängbar sind, wobei das Kabelkanal-Element (190) aus einem U-Profil oder einem Doppel-U-Profil aufgebaut ist, dessen Bodenfläche (192) so ausgebildet ist, daß ein weiteres Kabelkanal-Element (190) durch eine lösbare Rastverbindung (204, 206) anschließbar ist und wobei ein erster senkrechter Abschnitt (200) an seinem oberen Ende so ausgebildet ist, daß er mit der Nut (38) des Rahmenprofils (16) in Eingriff bringbar ist.

19. Tisch nach Anspruch 1, dadurch gekennzeichnet, daß ein Träger (215) für einen Computerbildschirm (219) verstellbar am Tischrahmen (4) angeordnet ist, indem ein Paar aus Rahmenprofilen gebildeter Winkel (216, 218) im Abstand am Rahmen (4) befestigt ist, deren erster Schenkel (220) sich senkrecht nach unten erstreckt und deren zweiter Schenkel (222) sich parallel zur Ebene der Tischplatte (8), aber parallel nach unten versetzt von der Tischplatte (8) weg nach außen erstreckt, wobei zwischen den zweiten waagerechten Schenkeln (222) eine Auflageplatte (239) befestigt ist, auf der ein verschiebbarer Wagen (230) abrollt, der an einer zwischen den ersten Schenkeln (220) befestigten Führungsschiene (228) angebracht ist.

20. Tisch nach einem der vorangehenden Ansprüche, dadurch gekennzeichnet, daß alle Schrauben mit Innen-Sechskant-Kopf ausgebildet sind.

## Claims

1. A table (2) with
- a frame (4),
- which is constructed from interconnected frame sections (16)
- which accommodates on its frame sections (16) at arbitrary, freely choosable locations table legs (6) and optionally connectors (22) for other tables and/or desk accessories (10, 12)
- and which has at least one receptacle (20) for a table plate (8), with
- at least three table legs (6) which have fastening elements or adapters equipped with fastening elements at their upper ends (128) and are thus predisposed for mounting on freely choosable locations of the frame sections (16), and with
- a table plate (8) which lies on the receptacle (20) of the frame (4).

2. Table according to claim 1 **characterized in that** the frame (4) is built from frame sections (16) arranged in rectangular or arc-segment shape.

3. Table according to claim 1 or 2 **characterized in that** the frame section (16) has a rectangular, preferably quadratic cross section, and that in at least one, in relation to the plane of the table plate, vertical side (36) of the frame section (16), a slot (38) with a slot opening (40) is formed, that runs parallel to the table plate and basically extends throughout the whole length of the frame section (16).

4. Table according to claim 1 **characterized in that** the frame sections (16), which interlock by means of corner connectors (18), are solidly or unreleasably connected for forming the frame (4).

5. Table according to claim 4 **characterized in that** the corner connector (18) has two pairs of tongues (60, 62), which can be fitted into two cavities (58) of the frame profiles to be connected, where these cavities extend parallel to the table plate (8), and that the two tongue pairs (60, 62) of the corner connector (18) are connected by an, in relation to the table plate's plane, vertical plate (64).

6. Table according to claim 1 or 5 **characterized in that** on the frame section (16) or on the corner connector (18), preferably on its vertical plate (64), a receptacle (20) for the table plate (8) is mounted.

7. Table according to claim 1 **characterized in that** an adapter (14, 26, 108) with reception tools (72, 110) for table legs (6), a table plate (8) or desk accessories (10, 12) is to be fastended releasably at freely choosable locations of the frame profile (16).

8. Table according to claim 7 **characterized in that**
- the reception tools are realized as a reception opening (72, 110)
- two bores (82, 84; 112, 114) to the right and left of the reception opening (72, 110) extend basically vertically to the reception opening
- two screws (92, 94; 111, 113) are guided through the bores (82, 84), on those of whose ends (98) that face away from the screwhead a cotter (100, 109) is fastened, which is sized in such a way that it can be latched in the slots (38) of the frame sections (16).

9. Table according to claim 7 or 8 **characterized in that** the adapter (14, 108) has on its frame section facing surface (88, 120) at least one lug (102, 104; 122, 124), whose thickness basically correspondes to the height of the slot opening (40) and which after the adapter (14, 108) is fastened on the frame section (16) protrudes into the slot (38).

10. Table according to one of the claims 7 through 9 **characterized in that** the adapter (108) has a placement surface (126), which interlocks with the frame section (16) from below.

11. Table according to claims 1 and 7 **characterized in that** the table leg (6) is made from a hollow section, in which an interior pipe (132) is surrounded by an exterior pipe (130), where the exterior pipe (130) may have a slot (138).

12. Table according to claim 11 **characterized in that** the table leg (6) on that of its ends (128) which faces the adapter (108), tapers conically in direction of its front surface, and that the reception opening (110) of the adapter (108) is likewise conically formed.

13. Table according to claim 11 **characterized in that** desk accessories such as telephone and draft holders, trays, a wastepaper basket or a printer shelf can be mounted releasably on the frame (4) or on the table leg (6).

14. Table according to claims 1 and 7 **characterized in that** an adapter (26) for mounting on the frame (4) has two bores, through which screws are guided, which on one end have a cotter, such that the cotter interlocks with the slot opening of the frame and that the adapter (26) has an arm facing away from the frame, and that this arm has a receptacle (28), which can engage with a plug (146) with an elastic ring mounted on a furniture element, e.g. a table plate (8).

15. Table according to claim 1 **characterized in that** the table plate (8) has on its lower side at least one plug (146), whose first end (148) has a thread (150) for screwing the plug (146) into the table plate (8), and whose second end (152) has a slot (158), into which an elastic ring (160) is mounted , such that the plug (146) is screwed into the table plate (8) in such a way, that when the table plate is laid onto it, the plug is in alignment with the reception opening (66) of the frame (4) and engages with it when the elastic ring (160) touches the ledge (68) of the socket (65).

16. Table according to claim 1 **characterized in that** a connector (22) can be attached to the frame (4), by which a first table can be releasably connected with a second table or table element, and that the connector (22) is formed as a double U-section with at least three vertically standing studs (164, 166, 168), whose vertically standing studs are positioned opposite to the vertical sides (36) of the frame profiles (16) and whose floor plate (162) interlocks from below with the frame sections (16) to be connected, and that the exterior studs (165, 166) have screws (172) inserted into them, which after the connector (22) is fastened, press onto a pressure contact surface (44) in the interior of the frame profiles (16).

17. Table according to claim 16, **characterized in that** the connector (174) has floor sections (176), from which studs (178, 180, 182) extend vertically upwards, such that the middle stud (180) is formed large enough, so that two frames (4) can be positioned in a defined mutual distance, and such that the middle stud (180) has reception tools (186), in which desk accessories (10, 12) can be accomodated.

18. Table according to claim 1 **characterized in that** individual cable duct elements (190) can be hung into the slot (38) of the frame sections (16) so that a cable duct is formed, and that the cable duct element (190) is built from a U-section or a double U-section, whose floor surface is formed in such a way, that a second cable duct element (190) can be joined on to it via a releasable snap connection (204, 206), and that a first vertical section (200) is formed at its upper end in such a way, that it can interlock with the slot (38) of the frame section (16).

19. Table according to claim 1 **characterized in that** a carrier (215) for a computer monitor (219) is adjustably mounted on the table frame (4), by means of letting a pair of angles (216, 218) formed from frame sections be attached to the frame (4) at a mutual distance, so that the first leg (220) of this pair of angles extends vertically upwards and the second leg (222) extends parallel to the plane of the table plate (8), but displaced in parallel downwards, away from the table plate (8) to the outside, in which case between the second horizontal legs (222) a supporting plate (239) is attached, along which a mobile carriage rolls, which is mounted on a guide rail (228) attached between the first pair of legs (220)

20. Table according to one of the preceding claims **characterized in that** all screws are formed with a hexagonal sockethead bolt head.

## Revendications

1. Table (2) avec
- un châssis (4)
- qui est constitué par des profilés de châssis (16) reliés les uns aux autres
- qui loge, sur les profilés de châssis (16), à des endroits quelconques pouvant être choisis librement, des pieds de table (6) et au choix des raccords (22) pour d'autres tables et/ou des accessoires de bureau (10, 12) et qui
- présente au moins un logement (20) pour un dessus de table (8), avec
- au moins trois pieds de table (6) qui présentent, respectivement à leurs extrémités supérieures (128), des éléments de fixation ou des adaptateurs pourvus d'éléments de fixation et qui sont ainsi configurés pour la fixation à des endroits pouvant être choisis librement des profilés de châssis (16) et avec
- un dessus de table (8) qui repose sur le logement (20) du châssis (4).

2. Table selon la revendication 1, caractérisée en ce que le châssis (4) est constitué par des profilés de châssis (16) placés en rectangle ou en forme de segment d'arc de cercle.

3. Table selon la revendication 1 ou 2, caractérisée en ce que le profilé de châssis (16) présente une section rectangulaire, de préférence carrée, et qu'une rainure (38) avec une ouverture de rainure (40) est façonnée dans au moins un côté vertical (36), par rapport au plan du dessus de table, du profilé de châssis (16), rainure qui est parallèle au plan du dessus de table et qui est substantiellement continue sur toute la longueur du profilé de châssis (16).

4. Table selon la revendication 1, caractérisée en ce que les profilés de châssis (16) sont reliés, de manière fixe ou amovible pour former le châssis (4), par des raccords d'angle (18) qui sont en prise les uns avec les autres .

5. Table selon la revendication 4, caractérisée en ce que le raccord d'angle (18) présente deux paires de languettes (60, 62) qui peuvent être logées respectivement dans deux espaces creux (58) des profilés de châssis à relier (16), espaces creux qui s'étendent parallèlement au plan du dessus de table (8), et que les deux paires de languettes (60, 62) du raccord d'angle (18) sont reliées par une plaque perpendiculaire (64) par rapport au plan du dessus de table.

6. Table selon la revendication 1 ou 5, caractérisée en ce qu'un logement (20) pour le dessus de table (8) est placé sur le profilé de châssis (16) ou sur le raccord d'angle (18), de préférence sur sa plaque perpendiculaire (64).

7. Table selon la revendication 1, caractérisée en ce qu'un adaptateur (14, 26, 108) avec des moyens de logement (72, 110) pour des pieds de table (6), un dessus de table (8) ou des accessoires de bureau (10, 12) doit être fixé de manière amovible à des endroits pouvant être choisis librement du profilé de châssis (16).

8. Table selon la revendication 7, caractérisée en ce que
- les moyens de logement sont constitués par une ouverture de logement (72, 110),
- que deux perçages (82, 84 ; 112, 114) s'étendent à droite et à gauche de l'ouverture de logement (72, 119) substantiellement perpendiculairement à l'ouverture de logement et que
- deux vis (92, 94, 111, 113) sont guidées par les perçages (82, 84) aux extrémités (98) détournées de la tête de vis desquels un coulisseau (100, 109) est respectivement fixé, coulisseau qui est dimensionné de telle manière qu'il peut être verrouillé dans les rainures (38) des profilés de châssis (16).

9. Table selon la revendication 7 ou 8, caractérisée en ce que l'adaptateur (14, 108) présente, sur la surface (88, 120) tournée vers le profilé de châssis, au moins un talon (102, 104 ; 122, 124) dont l'épaisseur correspond substantiellement à la hauteur de l'ouverture de la rainure (40) et qui, après fixation de l'adaptateur (14, 108) sur le profilé de châssis (16), pénètre dans la rainure (38).

10. Table selon l'une des revendications 7 à 9, caractérisée en ce que l'adaptateur (108) présente une surface d'appui (126) qui saisit le profilé de châssis (16) par en dessous.

11. Table selon la revendication 1 et 7, caractérisée en ce que le pied de table (6) est fabriqué en un profilé creux pour lequel un tube intérieur (132) est entouré par un tube extérieur (130), le tube extérieur (130) présentant, éventuellement, une rainure (138).

12. Table selon la revendication 11, caractérisée en ce que le pied de table (6) à l'extrémité (128) tournée vers l'adaptateur (108), s'effile de manière conique vers sa face frontale et que l'ouverture de logement (110) de l'adaptateur (108) est également configurée de manière conique.

13. Table selon la revendication 11, caractérisée en ce que des accessoires de bureau, comme support de téléphone ou de documents, des plateaux, une corbeille à papier ou un support d'imprimante, peuvent être fixés de manière amovible au châssis (4) ou au pied de table (6) au moyen d'adaptateurs (14).

14. Table selon la revendication 1 et 7, caractérisée en ce qu'un adaptateur (26) présente, pour la fixation au châssis (4), deux forures par lesquelles des vis sont guidées, vis qui présentent à une extrémité, un coulisseau, le coulisseau s'engrenant dans l'ouverture de rainure du châssis et l'adaptateur (26) présentant un bras détourné du châssis, bras qui présente un logement (28) qui peut être enclenché avec un tourillon (146) avec une bague élastique (160) fixé à un élément du meuble, par exemple à un dessus de table (8).

15. Table selon la revendication 1, caractérisée en ce que le dessus de table (8) est pourvu, sur sa face inférieure, d'au moins un tourillon (146) dont la première extrémité (148) présente un filet (150) pour visser le tourillon (146) dans le dessus de table (8) et dont la seconde extrémité (152) présente une rainure (158) dans laquelle une bague élastique (160) est mise en place, le tourillon (146) étant vissé dans le dessus de table (8) de telle manière que, le dessus de table étant posé, le tourillon est aligné avec l'orifice de logement (66) sur le châssis (4) et s'enclenche avec celui-ci du fait que la bague élastique (160) repose sur le gradin (68) du coussinet (65).

16. Table selon la revendication 1, caractérisée en ce qu'un raccord (22) peut être fixé sur le châssis (4), raccord par lequel une première table peut être reliée à une seconde table ou élément de table, le raccord (22) étant configuré comme un double profilé en U avec au moins trois entretoises (164, 166, 168) perpendiculaires, profilé en U dont les entretoises perpendiculaires sont situées en face des côtés verticaux (36) des profilés de châssis (16) et dont la plaque de fond (162) saisit par en dessous les profilés de châssis (16) à relier, et des vis (172) étant encastrées dans les entretoises extérieures (164, 166), vis qui, après fixation du raccord (22) sur des surfaces de pression (44), reposent à l'intérieur des profilés de châssis (16).

17. Table selon la revendication 16, caractérisée en ce que le raccord (174) présente des sections de fond (176) dont trois entretoises (178, 180, 182) s'étendent perpendiculairement vers le haut, l'entretoise du milieu (180) étant configurée si large que deux châssis (4) peuvent être positionnés à un écart défini l'un par rapport à l'autre et l'entretoise du milieu (180) présentant des moyens de logement (186) dans lesquels des accessoires de bureau (10, 12) peuvent être logés.

18. Table selon la revendication 1, caractérisée en ce que des éléments de caniveau de câbles (190) peuvent être accrochés dans la rainure (38) des profilés de châssis (16) en formant un caniveau de câbles, l'élément de caniveau de câbles (190) étant constitué par un profilé en U ou un double profilé en U dont la surface du fond (192) est configurée de telle manière qu'un autre élément de caniveau de câbles (190) peut être raccordé par un raccord à enclenchement amovible (204, 206), et un premier tronçon perpendiculaire (200) étant configuré à son extrémité supérieure de telle manière qu'il peut être amené en prise avec la rainure (38) du profilé de châssis (16).

19. Table selon la revendication 1, caractérisée en ce qu'un support (215) pour un écran d'ordinateur (219) est placé réglable sur le châssis de table (4), une paire de cornières (216, 218) formées par des profilés de châssis étant fixée à un écart sur le châssis (4), cornières dont le premier montant (220) s'étend perpendiculairement vers le bas et dont le second montant (222) s'étend parallèlement au plan du dessus de table (8) mais parallèlement vers le bas en étant décalé du desssus de table (8) en s'écartant vers l'extérieur, une plaque d'appui (239) étant fixée entre les deux montants horizontaux (222), plaque d'appui sur laquelle un chariot déplaçable (230) roule, chariot qui est fixé à un rail de guidage (228) fixé entre les premiers montants (220).

20. Table selon l'une des revendications précédentes, caractérisée en ce que toutes les vis sont configurées avec une tête à six pans creux.
